(19) Europäisches Patentamt
European Patent Office
Office européen des brevets

(11) EP 3 557 829 B1

(12) **EUROPEAN PATENT SPECIFICATION**

(45) Date of publication and mention of the grant of the patent:
**11.10.2023 Bulletin 2023/41**

(21) Application number: **18736707.3**

(22) Date of filing: **05.01.2018**

(51) International Patent Classification (IPC):
***H04L 27/26*** *(2006.01)* ***H04W 52/14*** *(2009.01)*
*H04W 52/26* *(2009.01)*

(52) Cooperative Patent Classification (CPC):
**H04W 52/146; H04L 27/261; H04L 27/2614;**
H04W 52/262

(86) International application number:
**PCT/CN2018/071657**

(87) International publication number:
**WO 2018/127157 (12.07.2018 Gazette 2018/28)**

(54) **TRANSMITTING METHOD AND RECEIVING METHOD FOR UPLINK SIGNAL, TERMINAL, AND BASE STATION**

SENDEVERFAHREN UND EMPFANGSVERFAHREN FÜR UPLINK-SIGNAL, ENDGERÄT UND BASISSTATION

PROCÉDÉ DE TRANSMISSION ET PROCÉDÉ DE RÉCEPTION POUR SIGNAL DE LIAISON MONTANTE, TERMINAL ET STATION DE BASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2017 CN 201710011447**

(43) Date of publication of application:
**23.10.2019 Bulletin 2019/43**

(73) Proprietor: **Huawei Technologies Co., Ltd.**
**Longgang District**
**Shenzhen, Guangdong 518129 (CN)**

(72) Inventors:
- **ZHAO, Zhao**
**Shenzhen**
**Guangdong 518129 (CN)**
- **QIN, Long**
**Shenzhen**
**Guangdong 518129 (CN)**
- **JI, Liuliu**
**Shenzhen**
**Guangdong 518129 (CN)**

(74) Representative: **Maiwald GmbH**
**Elisenhof**
**Elisenstraße 3**
**80335 München (DE)**

(56) References cited:
**WO-A1-2012/177207**
**WO-A2-2008/052195**
**WO-A2-2010/091425**
**CN-A- 101 132 205**
**CN-A- 103 379 603**
**CN-A- 104 244 389**
**US-A1- 2015 092 699**
**US-A1- 2018 124 710**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 557 829 B1

## Description

### TECHNICAL FIELD

Embodiments of the present invention relate to the field of communications technologies, and in particular, to an uplink signal sending method and receiving method, a terminal, and a base station.

### BACKGROUND

At present, power control in Long Term Evolution (Long Term Evolution, LTE) mainly includes power control performed on a physical uplink shared channel (Physical Uplink Shared Channel, PUSCH), a physical uplink control channel (Physical Uplink Control Channel, PUCCH), a physical random access channel (Physical Random Access Channel, PRACH), and a channel sounding reference signal (Sounding Reference Signal, SRS). A basic principle is an open loop plus a closed loop. The open loop means that a terminal estimates a path loss path loss based on a downlink reference signal, and then performs uplink transmit power compensation. The closed loop means that a base station sends an instruction to a terminal based on a received uplink transmit power of the terminal, to indicate a dynamic power offset. Uplink power control is to ensure correct signal reception and an interference level between terminals.

Due to a single-carrier feature in LTE, there is no SRS multiplexing scenario. In existing LTE power control, power control is separately performed on a PUSCH, a PUCCH, and an SRS.

However, in 5G, new radio (New radio, NR) supports a new scenario, and a capability of a terminal is improved. Therefore, a function that can be supported is enhanced. In NR, a cyclic prefix orthogonal frequency division multiplexing (Cyclic prefix-Orthogonal frequency division multiplexing, CP-OFDM) technology is supported in uplink. In addition, as a supplementary technology, discrete Fourier transform spread orthogonal frequency division multiplexing (Discrete Fourier Transform spread OFDM, DFT-s-OFDM) also needs to be supported.

Two waveforms: CP-OFDM and DFT-s-OFDM are supported in uplink, and the two waveforms use a consistent pilot design. Therefore, in NR, CP-OFDM users and DFT-s-OFDM users all support multiplexing between an RS and a channel.

When multiplexing exists between an RS and a channel in a same OFDM symbol, a PAPR in the OFDM symbol is higher than a PAPR in another OFDM symbol not multiplexed by an RS. Therefore, a peak-to-average power ratio (Peak-to-average Power Ratio, PAPR) between OFDM symbols is low. Consequently, some terminals use a power back-off method to meet a peak power transmit requirement. However, by using such a power back-off method, a transmit power of a remaining symbol not multiplexed by an RS is also reduced. Such a performance loss is unfair to these symbols.

In conclusion, in NR, there is a problem that the PAPR of the OFDM symbol multiplexed by an RS and a channel is higher than the PAPR of the OFDM symbol not multiplexed by an RS. As a result, a power-limited terminal cannot normally send data. US 2018/0124710 A1, which is a document falling under Article 54(3) EPC, discloses techniques and apparatuses for performing uplink power control CN103379603 is another example of a disclosure providing power control for uplink transmissions.

### SUMMARY

Embodiments of the present invention provide an uplink signal sending method and receiving method, a terminal, and a base station, to resolve a problem in NR that a PAPR of an OFDM symbol multiplexed by an RS and a channel is higher than a PAPR of an OFDM symbol not multiplexed by an RS. The present application is defined in the appended independent claims. Further implementations are disclosed in the pending dependent claims. In the following, implementations not falling within the scope of the claims are to be understood as examples useful for understanding the application.

According to a first aspect, an embodiment of the present invention provides an uplink signal sending method, including:

receiving, by a terminal, downlink signaling delivered by a base station, and determining, based on the downlink signaling, a waveform used by the terminal;
determining, by the terminal based on a correspondence between the waveform used by the terminal and a power difference, a power difference corresponding to a target time-frequency resource; and
determining, by the terminal based on the determined power difference, an uplink transmit power of an uplink signal that is mapped on the target time-frequency resource, and sending the uplink signal by using the uplink transmit power.

In this embodiment of the present invention, the terminal receives the downlink signaling delivered by the base station, and determines, based on the signaling, the waveform used by the terminal. The terminal determines, based

on the correspondence between a waveform and a power difference, the power difference corresponding to the target time-frequency resource; and further determines, based on the determined power difference, the uplink transmit power of the uplink signal that is mapped on the target time-frequency resource, and sends the uplink signal by using the power. The target time-frequency resource refers to an OFDM symbol multiplexed by an RS and a channel, or may be an RE that is used for mapping a channel and that is in an OFDM symbol multiplexed by an RS and a channel. In this embodiment, a transmit power of the uplink signal on the target time-frequency resource is reduced to reduce a PAPR of the OFDM symbol multiplexed by an RS and a channel or a PAPR of an RE that is used for mapping a channel and that is in the OFDM symbol multiplexed by an RS and a channel, so that a power-limited terminal can also normally send data, thereby optimizing use of a transmit power of the power-limited terminal.

The power difference in the correspondence indicates a power difference between a first symbol and a second symbol, the first symbol is an OFDM symbol multiplexed by a reference signal RS and a channel, and the second symbol is an OFDM symbol not multiplexed by an RS; or

the power difference in the correspondence indicates a power difference between a first RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

The OFDM symbol multiplexed by an RS and a channel means that an RE used for mapping a reference signal and an RE used for mapping a channel both exist on a plurality of time-frequency resources of one resource unit at a same time. The OFDM symbol not multiplexed by an RS means that, on a plurality of time-frequency resources of one resource unit at a same time, there is no OFDM symbol in which both a channel and a reference signal are mapped. One resource unit includes a plurality of time-frequency resources. For example, the resource unit is an RB in LTE. The time-frequency resource refers to a time-frequency unit of resource mapping. For example, the time-frequency resource is an RE in LTE.

In the foregoing embodiment of the present invention, two definitions of the power difference are provided, and the two definitions respectively correspond to two methods for reducing a transmit power of the terminal. A first manner is reducing the transmit power with regard to an entire OFDM symbol (namely, the first symbol), and a second manner is reducing the transmit power with regard to an RE in the first symbol. Different application scenarios may correspond to different power control methods of the terminal. The methods may be flexibly applied.

With reference to the first possible implementation of the first aspect, in a second possible implementation of the first aspect, the RS is a reference signal used for demodulation or a reference signal used for channel sounding, and the channel is an uplink data channel, an uplink control channel, or a random access channel.

With reference to the first aspect, or the first possible implementation of the first aspect, or the second possible implementation of the first aspect, in a third possible implementation of the first aspect, a power difference corresponding to a CP-OFDM waveform is different from a power difference corresponding to a DFT-s-OFDM waveform.

With reference to any one of the first aspect and the first possible implementation of the first aspect to the third possible implementation of the first aspect, in a fourth possible implementation of the first aspect, the downlink signaling is physical layer signaling, or the downlink signaling is higher layer signaling.

According to a second aspect, an embodiment of the present invention provides an uplink signal sending method, including:

receiving, by a terminal, downlink signaling delivered by a base station, where the downlink signaling indicates a power difference of the terminal on a target time-frequency resource; and

determining, by the terminal based on the downlink signaling, an uplink transmit power of an uplink signal that is mapped on the target time-frequency resource, and sending the uplink signal by using the uplink transmit power.

In this embodiment of the present invention, the terminal receives the downlink signaling delivered by the base station, where the signaling indicates the power difference of the terminal on the target time-frequency resource. The terminal determines, based on the downlink signaling, the uplink transmit power of the uplink signal that is mapped on the target time-frequency resource, and sends the uplink signal by using the power. The target time-frequency resource refers to an OFDM symbol multiplexed by an RS and a channel, or may be an RE that is used for mapping a channel and that is in an OFDM symbol multiplexed by an RS and a channel. In this embodiment, a transmit power of the uplink signal on the target time-frequency resource is reduced to reduce a PAPR of the OFDM symbol multiplexed by an RS and a channel or a PAPR of an RE that is used for mapping a channel and that is in the OFDM symbol multiplexed by an RS and a channel, so that a power-limited terminal can also normally send data, thereby optimizing use of a transmit power of the power-limited terminal.

The power difference indicated by the downlink signaling indicates a power difference between a first symbol and a second symbol, the first symbol is an OFDM symbol multiplexed by an RS and a channel, and the second symbol is an OFDM symbol not multiplexed by an RS; or

the power difference indicated by the downlink signaling indicates a power difference between a first RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

The RS is a reference signal used for demodulation or a reference signal used for channel sounding, and the channel is an uplink data channel, an uplink control channel, or a random access channel.

In the foregoing embodiment of the present invention, two definitions of the power difference are provided, and the two definitions respectively correspond to two methods for reducing a transmit power of the terminal. A first manner is reducing the transmit power with regard to an entire OFDM symbol (namely, the first symbol), and a second manner is reducing the transmit power with regard to an RE in the first symbol. Different application scenarios may correspond to different power control methods of the terminal. The methods may be flexibly applied.

The downlink signaling is physical layer signaling, or the downlink signaling is higher layer signaling.

According to a third aspect, an embodiment of the present invention provides an uplink signal receiving method, including:

determining, by a base station, a waveform used by a terminal, and sending, to the terminal, downlink signaling corresponding to the waveform;
receiving, by the base station, an uplink signal that is sent by the terminal and that is mapped on a target time-frequency resource; and
determining, by the base station based on the waveform used by the terminal and a correspondence between a waveform and a power difference, a power difference corresponding to the uplink signal on the target time-frequency resource, and parsing the uplink signal based on the power difference.

In this embodiment of the present invention, the base station sends the downlink signaling to the terminal, and the terminal determines, based on the signaling, the waveform used by the terminal. The base station receives the uplink signal that is sent by the terminal and that is mapped on the target time-frequency resource. The base station determines, based on the waveform used by the terminal and the correspondence between a waveform and a power difference, the power difference corresponding to the uplink signal on the target time-frequency resource, and parses the uplink signal based on the power difference. The target time-frequency resource refers to an OFDM symbol multiplexed by an RS and a channel, or may be an RE that is used for mapping a channel and that is in an OFDM symbol multiplexed by an RS and a channel. In this embodiment, a transmit power of the uplink signal on the target time-frequency resource is reduced to reduce a PAPR of the OFDM symbol multiplexed by an RS and a channel or a PAPR of an RE that is used for mapping a channel and that is in the OFDM symbol multiplexed by an RS and a channel, so that a power-limited terminal can also normally send data, thereby optimizing use of a transmit power of the power-limited terminal.

With reference to the third aspect, in a first possible implementation of the third aspect, the downlink signaling is physical layer signaling, or the downlink signaling is higher layer signaling.

According to a fourth aspect, an embodiment of the present invention provides an uplink signal receiving method, including:

sending, by a base station, downlink signaling to a terminal, where the downlink signaling indicates a power difference of the terminal on a target time-frequency resource;
receiving, by the base station, an uplink signal that is sent by the terminal and that is mapped on the target time-frequency resource; and
parsing, by the base station, the uplink signal based on the power difference on the target time-frequency resource.

In this embodiment of the present invention, the base station sends the downlink signaling to the terminal, where the downlink signaling indicates the power difference of the terminal on the target time-frequency resource. The base station receives the uplink signal that is sent by the terminal and that is mapped on the target time-frequency resource. The base station parses the uplink signal based on the power difference on the target time-frequency resource. The target time-frequency resource refers to an OFDM symbol multiplexed by an RS and a channel, or may be an RE that is used for mapping a channel and that is in an OFDM symbol multiplexed by an RS and a channel. In this embodiment, a transmit power of the uplink signal on the target time-frequency resource is reduced to reduce a PAPR of the OFDM symbol multiplexed by an RS and a channel or a PAPR of an RE that is used for mapping a channel and that is in the OFDM symbol multiplexed by an RS and a channel, so that a power-limited terminal can also normally send data, thereby optimizing use of a transmit power of the power-limited terminal.

With reference to the fourth aspect, in a first possible implementation of the fourth aspect, the downlink signaling is physical layer signaling, or the downlink signaling is higher layer signaling.

According to a fifth aspect, an embodiment of the present invention provides a terminal, including:

a receiving unit, configured to: receive downlink signaling delivered by a base station, and determine, based on the downlink signaling, a waveform used by a terminal;
a power difference determining unit, configured to determine, based on a correspondence between the waveform used by the terminal and a power difference, a power difference corresponding to a target time-frequency resource;
a transmit power determining unit, configured to determine, based on the determined power difference, an uplink transmit power of an uplink signal that is mapped on the target time-frequency resource; and
a sending unit, configured to send the uplink signal by using the determined uplink transmit power.

The power difference in the correspondence indicates a power difference between a first symbol and a second symbol, the first symbol is an OFDM symbol multiplexed by an RS and a channel, and the second symbol is an OFDM symbol not multiplexed by an RS; or
the power difference in the correspondence indicates a power difference between a first RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.
With reference to the first possible implementation of the fifth aspect, in a second possible implementation of the fifth aspect, the RS is a reference signal used for demodulation or a reference signal used for channel sounding, and the channel is an uplink data channel, an uplink control channel, or a random access channel.
With reference to the fifth aspect, or the first possible implementation of the fifth aspect, or the second possible implementation of the fifth aspect, in a third possible implementation of the fifth aspect, a power difference corresponding to a CP-OFDM waveform is different from a power difference corresponding to a DFT-s-OFDM waveform.
With reference to any one of the fifth aspect and the first possible implementation of the fifth aspect to the third possible implementation of the fifth aspect, in a fourth possible implementation of the fifth aspect, the downlink signaling is physical layer signaling, or the downlink signaling is higher layer signaling.
According to a sixth aspect, an embodiment of the present invention provides a terminal, including:

a receiving unit, configured to receive downlink signaling delivered by a base station, where the downlink signaling indicates a power difference of the terminal on a target time-frequency resource;
a transmit power determining unit, configured to determine, based on the downlink signaling, an uplink transmit power of an uplink signal that is mapped on the target time-frequency resource; and
a sending unit, configured to send the uplink signal by using the determined uplink transmit power.

The power difference indicated by the downlink signaling indicates a power difference between a first symbol and a second symbol, the first symbol is an OFDM symbol multiplexed by an RS and a channel, and the second symbol is an OFDM symbol not multiplexed by an RS; or
the power difference indicated by the downlink signaling indicates a power difference between a first RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.
The RS is a reference signal used for demodulation or a reference signal used for channel sounding, and the channel is an uplink data channel, an uplink control channel, or a random access channel.
The downlink signaling is physical layer signaling, or the downlink signaling is higher layer signaling.
According to a seventh aspect, an embodiment of the present invention provides a base station, including:

a sending unit, configured to: determine a waveform used by a terminal, and send, to the terminal, downlink signaling corresponding to the waveform;
a receiving unit, configured to receive an uplink signal that is sent by the terminal and that is mapped on a target time-frequency resource;
a power difference determining unit, configured to determine, based on the waveform used by the terminal and a correspondence between a waveform and a power difference, a power difference corresponding to the uplink signal on the target time-frequency resource; and
a parsing unit, configured to parse the uplink signal based on the power difference.

With reference to the seventh aspect, in a first possible implementation of the seventh aspect, the downlink signaling is physical layer signaling, or the downlink signaling is higher layer signaling.
According to an eighth aspect, an embodiment of the present invention provides a base station, including:

a sending unit, configured to send downlink signaling to a terminal, where the downlink signaling indicates a power

difference of the terminal on a target time-frequency resource;

a receiving unit, configured to receive an uplink signal that is sent by the terminal and that is mapped on the target time-frequency resource; and

a parsing unit, configured to parse the uplink signal based on the power difference on the target time-frequency resource.

With reference to the eighth aspect, in a first possible implementation of the eighth aspect, the downlink signaling is physical layer signaling, or the downlink signaling is higher layer signaling.

According to a ninth aspect, this application provides a terminal, including a processor, a transceiver, and a memory. The processor can perform the uplink signal sending method provided in the first aspect or any possible implementation of the first aspect. The memory is configured to store a computer executable instruction. The transceiver is configured to send and receive signaling and data.

According to a tenth aspect, this application provides a terminal, including a processor, a transceiver, and a memory. The processor can perform the uplink signal sending method provided in the second aspect or any possible implementation of the second aspect. The memory is configured to store a computer executable instruction. The transceiver is configured to send and receive signaling and data.

According to an eleventh aspect, this application provides a base station, including a processor, a transceiver, and a memory. The processor can perform the uplink signal receiving method provided in the third aspect or any possible implementation of the third aspect. The memory is configured to store a computer executable instruction. The transceiver is configured to send and receive signaling and data.

According to a twelfth aspect, this application provides a base station, including a processor, a transceiver, and a memory. The processor can perform the uplink signal receiving method provided in the fourth aspect or any possible implementation of the fourth aspect. The memory is configured to store a computer executable instruction. The transceiver is configured to send and receive signaling and data.

Further, an apparatus is provided.

In a possible design, the apparatus includes one or more processors and a communications unit. The one or more processors are configured to support the apparatus in performing a corresponding function of a network device (for example, the base station) in the foregoing method, for example, determining a power difference corresponding to an uplink signal on a target time-frequency resource. The communications unit is configured to support the apparatus in communicating with another device, to implement a receiving function and/or a sending function, for example, sending downlink signaling.

Optionally, the apparatus may further include one or more memories. The memory is configured to be coupled to a processor, and the memory stores a program instruction and/or data necessary for a network device. The one or more memories may be integrated with the processor, or may be separate from the processor. This is not limited in this application.

The apparatus may be a base station, a gNB, a TRP, or the like. The communications unit may be a transceiver or a transceiver circuit. Optionally, the transceiver may alternatively be an input/output circuit or interface.

The apparatus may alternatively be a communications chip. The communications unit may be an input/output circuit or interface of the communications chip.

In another possible design, the apparatus includes a transceiver, a processor, and a memory. The processor is configured to control the transceiver to send and receive a signal. The memory is configured to store a computer program. The processor is configured to run the computer program in the memory, so that the apparatus performs the method implemented by a network device (for example, the base station) in the third aspect, the fourth aspect, or any possible implementation of the third aspect or the fourth aspect.

In a possible design, the apparatus includes one or more processors and a communications unit. The one or more processors are configured to support the apparatus in performing a corresponding function of the terminal in the foregoing method, for example, determining a waveform used by the terminal. The communications unit is configured to support the apparatus in communicating with another device, to implement a receiving function and/or a sending function, for example, receiving downlink signaling.

Optionally, the apparatus may further include one or more memories. The memory is configured to be coupled to a processor, and the memory stores a program instruction and/or data necessary for the apparatus. The one or more memories may be integrated with the processor, or may be separate from the processor. This is not limited in this application.

The apparatus may be an intelligent terminal, a wearable device, or the like. The communications unit may be a transceiver or a transceiver circuit. Optionally, the transceiver may alternatively be an input/output circuit or interface.

The apparatus may alternatively be a communications chip. The communications unit may be an input/output circuit or interface of the communications chip.

In another possible design, the apparatus includes a transceiver, a processor, and a memory. The processor

is configured to control the transceiver to send and receive a signal. The memory is configured to store a computer program. The processor is configured to run the computer program in the memory, so that the apparatus performs the method implemented by the terminal in the first aspect, the second aspect, or any possible implementation of the first aspect or the second aspect.

According to a thirteenth aspect, a system is provided. The system includes the terminal and a network device.

According to a fourteenth aspect, a computer readable storage medium is provided and is configured to store a computer program. The computer program includes an instruction used to perform the method according to any one of the first aspect to the fourth aspect or any possible implementation of the first aspect to the fourth aspect.

According to a fifteenth aspect, a computer program product is provided. The computer program product includes computer program code. When the computer program code runs on a computer, the computer performs the method according to any one of the first aspect to the fourth aspect or any possible implementation of the first aspect to the fourth aspect.

## BRIEF DESCRIPTION OF DRAWINGS

FIG 1 is a flowchart of uplink signal sending and receiving according to an embodiment of the present invention;
FIG 2 is a schematic diagram of a target time-frequency resource according to an embodiment of the present invention;
FIG 3 is a schematic diagram of another target time-frequency resource according to an embodiment of the present invention;
FIG 4 is a flowchart of an uplink signal sending and receiving method according to an embodiment of the present invention;
FIG 5 is a schematic diagram of a terminal according to an embodiment of the present invention;
FIG 6 is a schematic diagram of a terminal according to an embodiment of the present invention;
FIG 7 is a schematic diagram of a base station according to an embodiment of the present invention;
FIG 8 is a schematic diagram of a base station according to an embodiment of the present invention;
FIG 9 is a schematic diagram of a terminal according to an embodiment of the present invention; and
FIG 10 is a schematic diagram of a base station according to an embodiment of the present invention.

## DESCRIPTION OF EMBODIMENTS

To make the objectives, technical solutions, and advantages of the present invention more clearly, the following further describes the present invention in detail with reference to the accompanying drawings and the embodiments.

The embodiments of this application are applicable to a 4G (a 4th generation mobile communications system) evolved system such as an LTE (Long Term Evolution, long term evolution) system, a 5G (a 5th generation mobile communications system) system such as an access network using a new radio access technology (new radio access technology, New RAT), a CRAN (Cloud Radio Access Network, cloud radio access network), or another communications system. The following explains some terms in this application, to facilitate understanding of a person skilled in the art.

(1) A terminal, also referred to as user equipment (User Equipment, UE), is a device providing voice and/or data connectivity to a user, for example, a handheld device or an in-vehicle device with a wireless connection function. Common terminals include, for example, a mobile phone, a tablet computer, a notebook computer, a palmtop computer, a mobile Internet device (mobile internet device, MID), and a wearable device such as a smartwatch, a smart band, or a pedometer.

(2) A base station, also referred to as a radio access network (Radio Access Network, RAN) device, is a device that connects a terminal to a wireless network, and includes but is not limited to an evolved NodeB (evolved NodeB, eNB), a radio network controller (radio network controller, RNC), a NodeB (Node B, NB), a base station controller (Base Station Controller, BSC), a base transceiver station (Base Transceiver Station, BTS), a home eNodeB (for example, a Home evolved NodeB or a Home NodeB, HNB), and a baseband unit (BaseBand Unit, BBU), a gNodeB (g NodeB, gNB), a transmission/reception point (Transmitting and receiving point, TRP), and a transmission point (Transmitting point, TP). In addition, the base station may further include a Wi-Fi access point (Access Point, AP) and the like.

An NR system supports two waveforms: CP-OFDM and DFT-s-OFDM. Because of the following three reasons, in NR, a uniform time-frequency mapping pattern of a DMRS and/or an SRS may be designed for the two waveforms. First, such a design may facilitate scheduling of users that use the two waveforms in a multi-user multiplexing scenario.

For example, in a non-orthogonal multiple access (Non-orthogonal multiple access, NOMA) technology, two user terminals with different capabilities are scheduled for multiplexing. Second, for a DMRS, such a design facilitates making pilot patterns uniform between an uplink and a downlink, to reduce co-channel interference between an uplink and a downlink in an uplink and downlink dynamic scheduling technology. Third, a uniform pilot pattern design can reduce implementation complexity for a terminal. A specific uniform pilot pattern design may support time division between a pilot and a PUSCH or a PUCCH, frequency division between a pilot and a PUSCH or a PUCCH, and another manner. For a CP-OFDM user, the frequency division manner may be used between a pilot and a PUSCH or a PUCCH. Compared with a solution that a pilot occupies an entire OFDM symbol in an LTE system, this solution can be used to better use a resource and improve a system capacity. For DFT-s-OFDM, to also support such a multiplexing manner, a power-limited user needs to be considered. For example, for a user with a limited peak-to-average power ratio, an overall peak-to-average power ratio is reduced by reducing a power of a PUSCH or a PUCCH, where multiplexing exists between the PUSCH or the PUCCH and an RS.

**Embodiment 1**

FIG 1 shows an uplink signal sending and receiving method according to an embodiment of the present invention. The method includes the following steps:

Step 101: A base station determines a waveform used by a terminal.
Step 102: The base station sends, to the terminal, downlink signaling corresponding to the waveform.
Step 103: The terminal determines a power difference corresponding to a target time-frequency resource.
Step 104: The terminal determines an uplink transmit power of an uplink signal that is mapped on the target time-frequency resource.
Step 105: The terminal sends the uplink signal by using the determined uplink transmit power.
Step 106: The base station determines a power difference corresponding to the uplink signal on the target time-frequency resource.
Step 107: The base station parses the uplink signal by using the determined power difference.

Specifically, in step 101, the base station determines the waveform used by the terminal. The waveform used by the terminal refers to a baseband generation manner of the terminal. The waveform determined by the base station includes DFT-s-OFDM and CP-OFDM. DFT-s-OFDM is a single carrier technology. To be specific, the terminal performs transmission by using a single carrier. DFT-s-OFDM is mainly applicable to a cell edge terminal or a power-limited terminal. CP-OFDM is a multi-carrier multiplexing technology. The terminal may perform transmission by using a plurality of carriers.

When the base station determines that the waveform used by the terminal is DFT-s-OFDM, the terminal first performs DFT spread on a signal that has been mapped on a time-frequency resource, and then performs inverse fast Fourier transform (Inverse Fast Fourier Transform, IFFT), to generate a baseband signal.

When the base station determines that the waveform used by the terminal is CP-OFDM, the terminal directly performs IFFT on a signal that has been mapped on a time-frequency resource, to generate a baseband signal.

Specifically, when determining the waveform used by the terminal, the base station may determine and schedule, based on a reporting capability type of the terminal (for example, the terminal is a low-power-consumption terminal or a high-power-consumption terminal), whether the terminal is at a cell edge or a cell center, and the like, a type of the waveform used by the terminal.

In step 102, the base station sends, to the terminal, the downlink signaling corresponding to the waveform, where the downlink signaling may explicitly or implicitly indicate the waveform used by the terminal. Specifically, explicitly indicating the waveform used by the terminal means that information about the waveform used by the terminal is added into the downlink signaling to be sent to the terminal, and implicitly indicating the waveform used by the terminal means that the downlink signaling does not include information about the waveform, but the waveform may be indicated by using a delivery time, a frequency domain position, a content scrambling manner, or the like of the downlink signaling. In other words, when the terminal receives the downlink signaling, the waveform may be determined based on information about the downlink signaling such as the delivery time, the frequency domain position, and the content scrambling manner.

In addition, the base station may send the downlink signaling in the following manners.

Manner 1: The downlink signaling is higher layer signaling.

In this manner, the downlink signaling is the higher layer signaling. The base station sends the higher layer signaling to the terminal by using a higher layer. The downlink signaling may explicitly or implicitly indicate the waveform used by the terminal.

Explicitly indicating the waveform used by the terminal is used as an example. Specifically, higher layer configuration may be performed by using a common common parameter configuration, a terminal dedicated dedicated

parameter configuration, or a terminal group group parameter configuration. In an example of a terminal dedicated parameter configuration,

```
PUSCH-ConfigDelicated ::= SEQUENCE {
 uplinkWaveform ENUMERATED { CP-OFDM, DFT-s-OFDM}
}
```

In this example, a domain of signaling uplinkWaveform is used to indicate the waveform used by the terminal. A value of the domain is ENUMERATED { CP-OFDM, DFT-s-OFDM}, which means that one of the two values CP-OFDM and DFT-s-OFDM is selected as a value of the domain.

Manner 2: The downlink signaling is physical layer signaling.

In this manner, the downlink signaling is the physical layer signaling (for example, DCI signaling). The base station sends the DCI signaling to the terminal by using a physical layer. The DCI signaling may explicitly indicate the waveform used by the terminal.

Alternatively, the base station may deliver the downlink signaling by using the physical layer signaling, and the base station may implicitly notify UE of a status of the waveform by using different scrambling formats of PDCCH channels.

Explicitly indicating the waveform used by the terminal is used as an example. In a protocol, the base station delivers DCI signaling. DCI used to indicate various parameters used in uplink scheduling of the terminal is referred to as uplink grant UL grant information, and therefore, a waveform flag bit is added to the UL grant to indicate the waveform used by the terminal. In the waveform flag bit, 0 represents a CP-OFDM waveform and 1 represents a DFT-s-OFDM waveform, or 0 represents a DFT-s-OFDM waveform and 1 represents a CP-OFDM waveform.

Alternatively, the waveform is indicated in a default manner. For example, according to a configuration, the CP-OFDM waveform is used by default, or the DFT-s-OFDM waveform is used by default.

Manner 3: The downlink signaling is a combination of higher layer signaling and physical layer signaling.

In this manner, the base station configures, by using the higher layer signaling, the waveform used by the terminal on the target time-frequency resource, and explicitly sends the waveform to the terminal by using DCI signaling. In other words, this manner is a combination of manner 1 and manner 2. The higher layer signaling is used to configure the waveform, and the DCI signaling is used for delivery.

In step 103, the terminal determines the power difference corresponding to the target time-frequency resource. The target time-frequency resource refers to an OFDM symbol multiplexed by an RS and a channel, or the target time-frequency resource is an RE that is used for mapping a channel and that is in an OFDM symbol multiplexed by an RS and a channel.

In addition, the terminal may learn of, in the following manners, the target time-frequency resource that requires power adjustment.

A pattern mapping location of a pilot is defined in the protocol. The base station learns of, by using a mapping manner, a location, and the like of a scheduled time-frequency resource, a time-frequency resource on which an uplink pilot is mapped. In a possible manner, as predefined in the protocol, it is stipulated that multiplexing exists between a determined uplink pilot (a DMRS and/or an SRS) and a channel (for example, it is stipulated that multiplexing exists between the DMRS and a PUSCH at a same time domain position). In this way, the terminal learns of the target time-frequency resource that requires power adjustment.

In a communication process, as defined in the protocol, different waveforms correspond to different power differences. For example, Table 1 shows a correspondence between a waveform and a power difference.

**Table 1**

| Uplink waveform | Power difference |
|---|---|
| CP-OFDM | a |
| DFT-s-OFDM | b |

Table 1 is prestored in the base station and the terminal. When determining the waveform indicated by the base station, the terminal may learn of the power difference by searching Table 1. Specifically, a power difference corresponding to the CP-OFDM waveform is different from a power difference corresponding to the DFT-s-OFDM waveform, in other words, a is different from b in Table 1. In specific implementation, generally, after power difference adjustment is performed, a transmit power of an uplink signal corresponding to DFT-s-OFDM needs to be lower than a transmit power of an uplink signal corresponding to CP-OFDM. In other words, the transmit power corresponding to DFT-s-OFDM is reduced with a greater amplitude. For example, the transmit power corresponding to CP-OFDM is reduced by 1 dBm while the transmit power corresponding to DFT-s-OFDM is reduced by 2 dBm. In a specific implementation, it may be

assumed that a=0 and b=-3 in Table 1. To be specific, the transmit power corresponding to CP-OFDM remains unchanged, and the transmit power corresponding to DFT-s-OFDM is reduced by 3 dBm.

In this embodiment of the present invention, two implementations of the power difference are provided. In a specific implementation process, one of the implementations may be selected based on an actual requirement.

Implementation 1: The power difference is a power difference between a first symbol and a second symbol.

FIG 2 is a schematic diagram of a target time-frequency resource according to an embodiment of the present invention. In FIG 2, the target time-frequency resource refers to an OFDM symbol multiplexed by an RS and a channel. As shown in FIG 2, both an OFDM symbol 7 and an OFDM symbol 9 are target time-frequency resources. An RS mapped on the target time-frequency resource may be a reference signal used for uplink channel sounding, for example, a channel sounding reference signal (Sounding reference signal, SRS); or a reference signal used for demodulation, for example, a demodulation reference signal (Demodulation reference signal, DMRS). A white space on the target time-frequency resource represents a channel, and is used for data transmission. For example, the channel may be an uplink data channel (Physical uplink shared channel, PUSCH), an uplink control channel (Physical uplink control channel, PUCCH), or a physical random access channel (Physical Random Access Channel, PRACH).

In this case, the power difference is the power difference between the first symbol and the second symbol. The first symbol is an OFDM symbol multiplexed by an RS and a channel, and the second symbol is an OFDM symbol not multiplexed by an RS.

The OFDM symbol multiplexed by an RS and a channel means that an RE used for mapping a reference signal and an RE used for mapping a channel both exist on a plurality of time-frequency resources of one resource unit at a same time. The OFDM symbol not multiplexed by an RS means that, on a plurality of time-frequency resources of one resource unit at a same time, there is no OFDM symbol in which both a channel and a reference signal are mapped. One resource unit includes a plurality of time-frequency resources. For example, the resource unit is an RB in LTE. The time-frequency resource refers to a time-frequency unit of resource mapping. For example, the time-frequency resource is an RE in LTE.

In other words, in implementation 1, for the OFDM symbol in which an RS and a channel are mapped, power control is performed on the entire OFDM symbol (namely, the target time-frequency resource), to reduce a transmit power (including reduction on a transmit power of the channel and a transmit power of the RS in the OFDM symbol).

Implementation 2: The power difference is a power difference between a first RE in a first symbol and a second RE in a second symbol.

FIG 3 is a schematic diagram of another target time-frequency resource according to an embodiment of the present invention. In FIG 3, the target time-frequency resource is a time-frequency resource that is used for mapping a channel and that is in an OFDM symbol multiplexed by an RS and a channel. As shown in FIG 3, both a white time-frequency resource in an OFDM symbol 7 and a white time-frequency resource in an OFDM symbol 9 (namely, white resource elements (Resource Element, RE)) are target time-frequency resources.

In this case, the power difference is the power difference between the RE in the first symbol and the RE in the second symbol. The first symbol is an OFDM symbol multiplexed by an RS and a channel, and the second symbol is an OFDM symbol not multiplexed by an RS.

In other words, in implementation 2, for the OFDM symbol in which an RS and a channel are mapped, power control is performed on only the RE (namely, the target time-frequency resource) that is used for mapping a channel and that is in the OFDM symbol, to reduce a transmit power (only reduce a transmit power of a channel in the OFDM symbol).

In step 104, the terminal determines the uplink transmit power of the uplink signal that is mapped on the target time-frequency resource.

After determining the power difference corresponding to the waveform, the terminal can determine the uplink transmit power of the uplink signal that is mapped on the target time-frequency resource.

Specifically, the following possible manners may be used for implementation.

Method 1: Power reduction control is separately performed in PUSCH, PUCCH, PRACH, and SRS power control processes.

For example, multiplexing exists between an SRS and a channel to reduce a power of an SRS symbol. A set of the symbol is referred to as Sa, and a set of remaining symbols in which only a PUSCH and/or a PUCCH and/or a PRACH need(s) to be transmitted is referred to as Sb. As shown in the following, a function p(i) means a value obtained in a manner of performing power control (open-loop control, closed-loop control, and the like) on the PUSCH, the PUCCH, the PRACH, and the like in existing LTE, where k is a symbol number. Symbols in a subframe or a timeslot are classified into two types respectively forming the two symbol sets Sa and Sb. A value of a function l(k) indicates a power offset of a symbol numbered k. The function is a conditional function. When k belongs to Sa, the value of the function l(k) is value; when k belongs to Sb, a value of the function l(k) is 0. If it is configured that k belongs to Sa, l(k)=-3 dB; if k belongs to Sb, l(k)=0. Herein, value=-3 dB, and the value is obtained by using signaling configured by the base station.

$$P_{PUSCH,c}(i,k) = \min \begin{Bmatrix} P_{CMAX,c}(i) \\ P_{PUSCH}(i) + l(k) \end{Bmatrix},$$

$$P_{PUCCH,c}(i,k) = \min \begin{Bmatrix} P_{CMAX,c}(i) \\ P_{PUCCH}(i) + l(k) \end{Bmatrix},$$

$$P_{SRS,c}(i,k) = \min \begin{Bmatrix} P_{CMAX,c}(i) \\ P_{SRS}(i) + l(k) \end{Bmatrix}$$

, and

$$l(k) = \begin{cases} 0, k \in Sb \\ value, k \in Sa \end{cases}.$$

Method 2: Power control is first performed on a PUSCH, a PUCCH, a PRACH, an SRS, and the like, and then a power reduction operation is performed on some symbols in an entire subframe, namely, symbols multiplexed by an RS and a channel.

To be specific, power control is first performed on $P_{PUSCH,c}(i)$ , $P_{PUCCH,c}(i)$ , and $P_{SRS,c}(i)$ , to obtain a power P(i) of an entire symbol, and then power reduction is performed, where a reduced value is a value indicated by the signaling configured by the base station. For example, a power of 3 dB is reduced in a multiplexed symbol. In this case, an expression may be represented as the following formula. The formula herein means that, for the symbol k that belongs to Sa, a power of indicated 3 dB is reduced on a basis of P(i) obtained through calculation based on an existing power.

$$P(i, k \in Sa) = P(i) - 3$$

The second method is easier. However, the first method can better adapt to a maximum power, thereby avoiding a waste of the maximum power. Which manner is to be selected specifically may be determined based on an actual requirement or configuration.

In step 105, the terminal sends the uplink signal by using the determined uplink transmit power.

In step 106, the base station determines the power difference corresponding to the uplink signal on the target time-frequency resource.

Specifically, the base station may determine, by searching the correspondence table shown in Table 1, the power difference corresponding to the uplink signal on the target time-frequency resource.

In step 107, the base station parses the uplink signal by using the determined power difference.

Specifically, reception of the base station includes two parts: channel quality measurement and demodulation.

When this embodiment of the present invention is used when multiplexing exists between a DMRS and a PUSCH, during demodulation, for an average power estimated for the DMRS, compensation needs to be made for a reduced power of the DMRS or a reduced power of the PUSCH when signal detection is performed on the PUSCH.

When this embodiment of the present invention is used when multiplexing exists between a DMRS and a PUCCH, during demodulation, for an average power estimated for the DMRS, compensation needs to be made for a reduced power of the DMRS or a reduced power of the PUCCH when signal detection is performed on the PUCCH.

When this embodiment of the present invention is used when multiplexing exists between a DMRS and a PRACH, during demodulation, for an average power estimated for the DMRS, compensation needs to be made for a reduced power of the DMRS or a reduced power of the PRACH when signal detection is performed on the PRACH.

When this embodiment of the present invention is used for channel quality measurement of an SRS, and used for calculation of a signal to interference plus noise ratio and channel estimation by using the SRS, compensation needs to be made for a reduced power of the SRS or a reduced power of the PUSCH, PUCCH, or PRACH, to avoid an error between a signal to interference plus noise ratio obtained through calculation by using the SRS and a signal to interference plus noise ratio on a channel.

This embodiment of the present invention has the following beneficial effects:
In this embodiment, the protocol makes stipulation or the base station sends signaling, so that the terminal can learn of a power difference between a symbol and another symbol that is multiplexed by an RS and a channel. Therefore, the terminal can further proactively reduce a power of an OFDM symbol multiplexed by an RS and a channel, to reduce a PAPR. Alternatively, in a symbol multiplexed by an RS and a channel, a power of an RE on which an RS is mapped is not reduced, while a power of an RE on which a channel is mapped is reduced, to reduce a PAPR on the symbol. The terminal receives the signaling delivered by the base station, and learns of, by searching the table, a power difference that is on channels of a same type and that is between a symbol multiplexed by an RS and a channel and a symbol not multiplexed by an RS.

In Embodiment 1, the power difference is introduced to reduce a power of an RS symbol or a power of an RE in a symbol multiplexed by an RS and a channel, to adapt to a power-limited terminal. For example, uplink transmission performance of the terminal that uses DFT-s-OFDM is ensured. Therefore, in a power-limited scenario, use of a transmit power can be optimized.

**Embodiment 2**

FIG 4 shows an uplink signal sending and receiving method according to an embodiment of the present invention. The method includes the following steps:

Step 401: A base station determines a power difference of a terminal on a target time-frequency resource.
Step 402: The base station sends downlink signaling to the terminal.
Step 403: The terminal determines an uplink transmit power of an uplink signal that is mapped on the target time-frequency resource.
Step 404: The terminal sends the uplink signal by using the determined uplink transmit power.
Step 405: The base station parses the uplink signal based on the power difference on the target time-frequency resource.

A difference between Embodiment 2 and Embodiment 1 in the present invention lies in that, the base station directly determines the power difference of the terminal on the target time-frequency resource, and sends the power difference to the terminal by using the downlink signaling. Therefore, there is no need to instruct the terminal to further determine the power difference based on a waveform and a correspondence between a waveform and a power difference.

In step 401, the base station determines the power difference of the terminal on the target time-frequency resource. Implementations of the power difference are the same as those in Embodiment 1, and there are also two implementations.

Implementation 1: The power difference is a power difference between a first symbol and a second symbol.

FIG 2 is a schematic diagram of a target time-frequency resource according to an embodiment of the present invention. In FIG 2, the target time-frequency resource refers to an OFDM symbol multiplexed by an RS and a channel. As shown in FIG 2, both an OFDM symbol 7 and an OFDM symbol 9 are target time-frequency resources. An RS mapped on the target time-frequency resource may be a reference signal used for uplink channel sounding. For example, the RS may be a channel sounding reference signal (Sounding reference signal, SRS) or a reference signal used for demodulation. For example, the RS may be a demodulation reference signal (Demodulation reference signal, DMRS). A white space on the target time-frequency resource represents a channel, and is used for data transmission. For example, the channel may be an uplink data channel, an uplink control channel, or a random access channel.

In this case, the power difference is the power difference between the first symbol and the second symbol. The first symbol is an OFDM symbol multiplexed by an RS and a channel, and the second symbol is an OFDM symbol not multiplexed by an RS.

In other words, in implementation 1, for the OFDM symbol in which an RS and a channel are mapped, power control is performed on the entire OFDM symbol (namely, the target time-frequency resource), to reduce a transmit power (including reduction on a transmit power of the channel and a transmit power of the RS in the OFDM symbol).

Implementation 2: The power difference is a power difference between a first RE in a first symbol and a second RE in a second symbol.

FIG 3 is a schematic diagram of another target time-frequency resource according to an embodiment of the present invention. In FIG 3, the target time-frequency resource is a time-frequency resource that is used for mapping a channel and that is in an OFDM symbol multiplexed by an RS and a channel. As shown in FIG 3, both a white time-frequency resource in an OFDM symbol 7 and a white time-frequency resource in an OFDM symbol 9 (namely, white REs) are target time-frequency resources.

In this case, the power difference is the power difference between the RE in the first symbol and the RE in the second symbol. The first symbol is an OFDM symbol multiplexed by an RS and a channel, and the second symbol is

an OFDM symbol not multiplexed by an RS.

In other words, in implementation 2, for the OFDM symbol in which an RS and a channel are mapped, power control is performed on only the RE (namely, the target time-frequency resource) that is used for mapping a channel and that is in the OFDM symbol, to reduce a transmit power (only reduce a transmit power of a channel in the OFDM symbol).

In step 402, the base station sends the downlink signaling to the terminal.

Similar to the downlink signaling sending manner in Embodiment 1, this step also has three manners of delivering the downlink signaling by using higher layer signaling and by using physical layer signaling.

Manner 1: The downlink signaling is higher layer signaling.

In this manner, the downlink signaling is the higher layer signaling. The base station sends the higher layer signaling to the terminal by using a higher layer. The higher layer signaling indicates the power difference of the terminal on the target time-frequency resource.

For example, the higher layer signaling may be as follows:

```
PUSCH-ConfigDelicated ::=          SEQUENCE {
  referencesignalPowerDifference          INTEGER (−3, −2, −1, 0);
}
```

Manner 2: The downlink signaling is physical layer signaling.

In this manner, the downlink signaling is the physical layer signaling (for example, DCI signaling). The base station sends the DCI signaling to the terminal by using a physical layer. The DCI signaling indicates the power difference of the terminal on the target time-frequency resource.

For example, the base station may configure N bits in the DCI signaling, to indicate the power difference of the terminal on the target time-frequency resource.

The N bits may indicate $2^N$ power differences. For example, N=2, which may indicate four power differences. For example, as shown in Table 2:

**Table 2**

| 2 bits | Power difference |
|---|---|
| 00 | 0 |
| 01 | -1 |
| 10 | -2 |
| 11 | -3 |

Manner 3: The downlink signaling is a combination of higher layer signaling and physical layer signaling.

In this manner, the base station configures the power difference of the terminal on the target time-frequency resource by using the higher layer signaling, and sends, to the terminal, the configured power difference on the target time-frequency resource by using the DCI signaling. In other words, this manner is a combination of manner 1 and manner 2. The higher layer signaling is used to configure the power difference on the target time-frequency resource, and the DCI signaling is used for delivery.

In step 403, the terminal determines the uplink transmit power of the uplink signal that is mapped on the target time-frequency resource. In other words, the terminal determines, based on the received power difference, the uplink transmit power of the uplink signal on the target time-frequency resource. For details about a specific implementation, refer to Embodiment 1. Details are not described herein again.

In step 404, the terminal sends the uplink signal by using the determined uplink transmit power.

In step 405, the base station parses the uplink signal based on the power difference on the target time-frequency resource.

In this step, for details about a specific implementation of parsing the uplink signal by the base station based on the power difference on the target time-frequency resource, refer to an implementation in Embodiment 1. Details are not described herein again.

This embodiment of the present invention has the following beneficial effects:

In this embodiment, the protocol makes stipulation or the base station sends signaling, so that the terminal can directly learn of a power difference between a symbol and another symbol multiplexed by an RS and a channel. Therefore,

the terminal can further proactively reduce a power of an OFDM symbol multiplexed by an RS and a channel, to reduce a PAPR. Alternatively, in a symbol multiplexed by an RS and a channel, a power of an RE on which an RS is mapped is not reduced, while a power of an RE on which a channel is mapped is reduced, to reduce a PAPR on the symbol. The terminal receives the signaling delivered by the base station, and learns of, by searching the table, a power difference that is on channels of a same type and that is between a symbol multiplexed by an RS and a channel and a symbol not multiplexed by an RS.

In Embodiment 2, the power difference is introduced to reduce a power of an RS symbol or a power of an RE in a symbol multiplexed by an RS and a channel, to adapt to a power-limited terminal. For example, uplink transmission performance of the terminal that uses DFT-s-OFDM is ensured. Therefore, in a power-limited scenario, use of a transmit power can be optimized.

Based on a same inventive concept, an embodiment of the present invention provides a terminal 500. As shown in FIG 5, the terminal 500 includes:

a receiving unit 501, configured to: receive downlink signaling delivered by a base station, and determine, based on the downlink signaling, a waveform used by a terminal;
a power difference determining unit 502, configured to determine, based on a correspondence between the waveform used by the terminal and a power difference, a power difference corresponding to a target time-frequency resource;
a transmit power determining unit 503, configured to determine, based on the determined power difference, an uplink transmit power of an uplink signal that is mapped on the target time-frequency resource; and
a sending unit 504, configured to send the uplink signal by using the determined uplink transmit power.

The power difference in the correspondence indicates a power difference between a first symbol and a second symbol, the first symbol is an OFDM symbol multiplexed by an RS and a channel, and the second symbol is an OFDM symbol not multiplexed by an RS; or
the power difference in the correspondence indicates a power difference between a first RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

Optionally, the RS is a reference signal used for demodulation or a reference signal used for channel sounding, and the channel is an uplink data channel, an uplink control channel, or a random access channel.

Optionally, a power difference corresponding to a CP-OFDM waveform is different from a power difference corresponding to a DFT-s-OFDM waveform.

Optionally, the downlink signaling is delivered by using a physical layer by the base station, or the downlink signaling is delivered by using a higher layer by the base station.

Based on a same inventive concept, an embodiment of the present invention provides a terminal 600. As shown in FIG 6, the terminal 600 includes:

a receiving unit 601, configured to receive downlink signaling delivered by a base station, where the downlink signaling indicates a power difference of the terminal on a target time-frequency resource;
a transmit power determining unit 602, configured to determine, based on the downlink signaling, an uplink transmit power of an uplink signal that is mapped on the target time-frequency resource; and
a sending unit 603, configured to send the uplink signal by using the determined uplink transmit power.

The power difference indicated by the downlink signaling indicates a power difference between a first symbol and a second symbol, the first symbol is an OFDM symbol multiplexed by an RS and a channel, and the second symbol is an OFDM symbol not multiplexed by an RS; or
the power difference indicated by the downlink signaling indicates a power difference between a first RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

Based on a same inventive concept, an embodiment of the present invention provides a base station 700. As shown in FIG 7, the base station 700 includes:

a sending unit 701, configured to: determine a waveform used by a terminal, and send, to the terminal, downlink signaling corresponding to the waveform;
a receiving unit 702, configured to receive an uplink signal that is sent by the terminal and that is mapped on a target time-frequency resource;
a power difference determining unit 703, configured to determine, based on the waveform used by the terminal and

a correspondence between a waveform and a power difference, a power difference corresponding to the uplink signal on the target time-frequency resource; and
a parsing unit 704, configured to parse the uplink signal based on the power difference.

Optionally, the downlink signaling is physical layer signaling, or the downlink signaling is higher layer signaling.
Based on a same inventive concept, an embodiment of the present invention provides a base station 800. As shown in FIG 8, the base station 800 includes:

a sending unit 801, configured to send downlink signaling to a terminal, where the downlink signaling indicates a power difference of the terminal on a target time-frequency resource;
a receiving unit 802, configured to receive an uplink signal that is sent by the terminal and that is mapped on the target time-frequency resource; and
a parsing unit 803, configured to parse the uplink signal based on the power difference on the target time-frequency resource.

Optionally, the downlink signaling is physical layer signaling, or the downlink signaling is higher layer signaling.
Based on a same inventive concept, an embodiment of the present invention further provides an uplink signal sending apparatus 900. Specifically, the sending apparatus 900 may be a terminal, a chip, or the like. As shown in FIG 9, the sending apparatus includes a processor 901, a memory 902, and a transceiver 903. The processor 901, the memory 902, and the transceiver 903 are all connected by using a bus 904.
The memory 902 is configured to store a computer executable instruction. The memory 902 may be integrated into the processor, or may be separate from the processor 901.
The processor 901 is configured to execute the computer executable instruction stored in the memory 902.
The processor 901 executes the computer executable instruction stored in the memory 902. In this way, the sending apparatus 900 performs the steps performed by the terminal in the uplink signal sending method provided in the embodiment of the present invention, or the terminal deploys functional units corresponding to the steps.
The processor 901 may include different types of processors 901 or a same type of processor 901. The processor 901 may be any one of the following: a central processing unit (Central Processing Unit, CPU for short), an ARM processor, a field programmable gate array (Field Programmable Gate Array, FPGA for short), an application-specific processor, and another device having a computing processing capability. In an optional implementation, the processor 901 may alternatively be integrated as a many-core processor.
The memory 902 may be any one or any combination of the following: a random access memory (Random Access Memory, RAM for short), a read-only memory (read-only memory, ROM for short), a non-volatile memory (non-volatile memory, NVM for short), a solid state drive (Solid State Drive, SSD for short), a mechanical hard disk, a magnetic disk, a disk array, and another storage medium.
The transceiver 903 is configured to exchange data between the sending apparatus 900 and another device. For example, the terminal exchanges data with a base station by using the transceiver 903. The transceiver 903 may be any one or any combination of the following: a network interface (such as an Ethernet interface), a wireless network interface card, and another device having a network access function.
The bus 904 may include an address bus, a data bus, a control bus, and the like. For ease of representation, a bold line is used to represent the bus in FIG 9. The bus 904 may be any one or any combination of the following: an Industrial Standard Architecture (Industrial Standard Architecture, ISA for short) bus, a Peripheral Component Interconnect (Peripheral Component Interconnect, PCI for short) bus, an extended industry standard architecture (Extended Industry Standard Architecture, EISA for short) bus, and another device for wired data transmission.
Based on a same inventive concept, an embodiment of the present invention further provides an uplink signal receiving apparatus 1000. Specifically, the receiving apparatus 1000 may be a base station, a chip, or the like. As shown in FIG 10, the receiving apparatus 1000 includes a processor 1001, a memory 1002, and a transceiver 1003. The processor 1001, the memory 1002, and the transceiver 1003 are all connected by using a bus 1004.
The memory 1002 is configured to store a computer executable instruction. The memory 1002 may be integrated into the processor, or may be separate from the processor 1001.
The processor 1001 is configured to execute the computer executable instruction stored in the memory 1002.
The processor 1001 executes the computer executable instruction stored in the memory 1002. In this way, the base station 1000 performs the steps performed by the base station in the uplink signal receiving method provided in the embodiment of the present invention, or the base station deploys functional units corresponding to the steps.
The processor 1001 may include different types of processors 1001 or a same type of processor 1001. The processor 1001 may be any one of the following: a central processing unit (Central Processing Unit, CPU for short), an ARM processor, a field programmable gate array (Field Programmable Gate Array, FPGA for short), an application-specific processor, and another device having a computing processing capability. In an optional implementation, the

processor 1001 may alternatively be integrated as a many-core processor.

The memory 1002 may be any one or any combination of the following: a random access memory (Random Access Memory, RAM for short), a read-only memory (read-only memory, ROM for short), a non-volatile memory (non-volatile memory, NVM for short), a solid state drive (Solid State Drive, SSD for short), a mechanical hard disk, a magnetic disk, a disk array, and another storage medium.

The transceiver 1003 is configured to exchange data between the receiving apparatus 1000 and another device. For example, the base station exchanges data with a terminal by using the transceiver 1003. The transceiver 1003 may be any one or any combination of the following: a network interface (such as an Ethernet interface), a wireless network interface card, and another device having a network access function.

The bus 1004 may include an address bus, a data bus, a control bus, and the like. For ease of representation, a bold line is used to represent the bus in FIG 10. The bus 1004 may be any one or any combination of the following: an Industrial Standard Architecture (Industrial Standard Architecture, ISA for short) bus, a Peripheral Component Interconnect (Peripheral Component Interconnect, PCI for short) bus, an extended industry standard architecture (Extended Industry Standard Architecture, EISA for short) bus, and another device for wired data transmission.

An embodiment of the present invention provides a computer readable storage medium. The computer readable storage medium stores a computer executable instruction. A processor of a terminal or a processor of a base station executes the computer executable instruction. In this way, the terminal or the base station performs the steps performed by the terminal or the base station in the uplink signal sending method provided in the embodiment of the present invention, or the terminal or the base station deploys functional units corresponding to the steps.

An embodiment of the present invention provides a computer program product. The computer program product includes a computer executable instruction, and the computer executable instruction is stored in a computer readable storage medium. A processor of a terminal or a processor of a base station may read the computer executable instruction from the computer readable storage medium. The processor executes the computer executable instruction. In this way, the terminal or the base station performs the steps performed by a network management device in the uplink signal sending method provided in the embodiment of the present invention, or a network management device deploys functional units corresponding to the steps.

A person skilled in the art should understand that the embodiments of the present invention may be provided as a method, a system, or a computer program product. Therefore, the embodiments of the present invention may use a form of hardware only embodiments, software only embodiments, or embodiments with a combination of software and hardware. Moreover, the embodiments of the present invention may use a form of a computer program product that is implemented on one or more computer-usable storage media (including but not limited to a magnetic disk memory, a CD-ROM, an optical memory, and the like) that include computer-usable program code.

The embodiments of the present invention are described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. An uplink signal power control method, comprising:

receiving (102), by a terminal, downlink signaling delivered by a base station, and determining, based on the

downlink signaling, a waveform used by the terminal;
determining (103), by the terminal based on a correspondence between the waveform used by the terminal and a power difference, a power difference corresponding to a target time-frequency resource; and
determining (104), by the terminal based on the determined power difference, an uplink transmit power of an uplink signal that is mapped on the target time-frequency resource, and sending the uplink signal by using the uplink transmit power; **characterized in that**
the power difference in the correspondence indicates a power difference between a first symbol and a second symbol, the first symbol is an orthogonal frequency division multiplexing OFDM symbol multiplexed by a reference signal RS and a channel, and the second symbol is an OFDM symbol not multiplexed by an RS; or
the power difference in the correspondence indicates a power difference between a first resource element RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

**2.** The method according to claim 1, wherein the RS is a reference signal used for demodulation or a reference signal used for channel sounding, and the channel is an uplink data channel, an uplink control channel, or a random access channel.

**3.** The method according to any one of claims 1 to 2, wherein a power difference corresponding to a cyclic prefix orthogonal frequency division multiplexing CP-OFDM waveform is different from a power difference corresponding to a discrete Fourier transform spread orthogonal frequency division multiplexing DFT-s-OFDM waveform.

**4.** The method according to any one of claims 1 to 3, wherein

the downlink signaling is physical layer signaling; or
the downlink signaling is higher layer signaling.

**5.** An uplink signal sending method, comprising:

receiving (402), by a terminal, downlink signaling delivered by a base station, wherein the downlink signaling indicates a power difference of the terminal on a target time-frequency resource; and
determining (403), by the terminal based on the downlink signaling, an uplink transmit power of an uplink signal that is mapped on the target time-frequency resource, and sending the uplink signal by using the uplink transmit power;
**characterized in that** the power difference indicated by the downlink signaling indicates a power difference between a first symbol and a second symbol, the first symbol is an OFDM symbol multiplexed by an RS and a channel, and the second symbol is an OFDM symbol not multiplexed by an RS; or
the power difference indicated by the downlink signaling indicates a power difference between a first RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

**6.** An uplink signal receiving method, comprising:

determining (101), by a base station, a waveform used by a terminal, and sending, to the terminal, downlink signaling corresponding to the waveform;
receiving (105), by the base station, an uplink signal that is sent by the terminal and that is mapped on a target time-frequency resource; and
determining (106), by the base station based on the waveform used by the terminal and a correspondence between a waveform and a power difference, a power difference corresponding to the uplink signal on the target time-frequency resource, and parsing (107) the uplink signal based on the power difference;
**characterized in that** the power difference in the correspondence indicates a power difference between a first symbol and a second symbol, the first symbol is an orthogonal frequency division multiplexing OFDM symbol multiplexed by a reference signal RS and a channel, and the second symbol is an OFDM symbol not multiplexed by an RS; or
the power difference in the correspondence indicates a power difference between a first resource element RE in a first symbol and a second RE in a second symbol, the first symbol is an OFDM symbol multiplexed by an RS and a channel, the second symbol is an OFDM symbol not multiplexed by an RS, the first RE is an RE used

for mapping a channel, and the second RE is an RE used for mapping a channel.

**7.** An uplink signal receiving method, comprising:

Sending (402), by a base station, downlink signaling to a terminal, wherein the downlink signaling indicates a power difference of the terminal on a target time-frequency resource;
Receiving (404), by the base station, an uplink signal that is sent by the terminal and that is mapped on the target time-frequency resource; and
Parsing (405), by the base station, the uplink signal based on the power difference on the target time-frequency resource;
**characterized in that** the power difference in the correspondence indicates a power difference between a first symbol and a second symbol, the first symbol is an orthogonal frequency division multiplexing OFDM symbol multiplexed by a reference signal RS and a channel, and the second symbol is an OFDM symbol not multiplexed by an RS; or
the power difference in the correspondence indicates a power difference between a first resource element RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

**8.** A terminal (500), comprising:

a transceiver (501), configured to: receive downlink signaling delivered by a base station, and send an uplink signal by using an uplink transmit power determined by a processor; and
the processor, configured to: determine, based on the downlink signaling, a waveform used by the terminal; determine, based on a correspondence between the waveform used by the terminal and a power difference, a power difference corresponding to a target time-frequency resource; and determine, based on the determined power difference, the uplink transmit power of the uplink signal that is mapped on the target time-frequency resource;
**characterized in that** the power difference in the correspondence indicates a power difference between a first symbol and a second symbol, the first symbol is an OFDM symbol multiplexed by an RS and a channel, and the second symbol is an OFDM symbol not multiplexed by an RS; or
the power difference in the correspondence indicates a power difference between a first RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

**9.** A terminal (600), comprising:

a transceiver (601), configured to: receive downlink signaling delivered by a base station, wherein the downlink signaling indicates a power difference of the terminal on a target time-frequency resource, and send an uplink signal by using an uplink transmit power determined by a processor; and
the processor, configured to determine, based on the downlink signaling, the uplink transmit power of the uplink signal that is mapped on the target time-frequency resource;
**characterized in that** the power difference in the correspondence indicates a power difference between a first symbol and a second symbol, the first symbol is an orthogonal frequency division multiplexing OFDM symbol multiplexed by a reference signal RS and a channel, and the second symbol is an OFDM symbol not multiplexed by an RS; or
the power difference in the correspondence indicates a power difference between a first resource element RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

**10.** Abase station (700), comprising:

a processor, configured to: determine a waveform used by a terminal; determine, based on the waveform used by the terminal and a correspondence between a waveform and a power difference, a power difference corresponding to an uplink signal on a target time-frequency resource; and parse the uplink signal based on the power difference; and

a transceiver, configured to send, to the terminal, downlink signaling corresponding to the waveform, and receive the uplink signal that is sent by the terminal and that is mapped on the target time-frequency resource;

**characterized in that** the power difference in the correspondence indicates a power difference between a first symbol and a second symbol, the first symbol is an orthogonal frequency division multiplexing OFDM symbol multiplexed by a reference signal RS and a channel, and the second symbol is an OFDM symbol not multiplexed by an RS; or

the power difference in the correspondence indicates a power difference between a first resource element RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

**11.** A base station (800), comprising:

a transceiver, configured to: send downlink signaling to a terminal, wherein the downlink signaling indicates a power difference of the terminal on a target time-frequency resource; and receive an uplink signal that is sent by the terminal and that is mapped on the target time-frequency resource; and

a processor, configured to parse the uplink signal based on the power difference on the target time-frequency resource;

**characterized in that** the power difference in the correspondence indicates a power difference between a first symbol and a second symbol, the first symbol is an orthogonal frequency division multiplexing OFDM symbol multiplexed by a reference signal RS and a channel, and the second symbol is an OFDM symbol not multiplexed by an RS; or

the power difference in the correspondence indicates a power difference between a first resource element RE in a first symbol and a second RE in a second symbol, the first symbol is an OFDM symbol multiplexed by an RS and a channel, the second symbol is an OFDM symbol not multiplexed by an RS, the first RE is an RE used for mapping a channel, and the second RE is an RE used for mapping a channel.

**12.** A communications apparatus (1000), comprising a processor, wherein the processor is coupled to a memory, wherein

the memory is configured to store a computer program; and

the processor is configured to execute the computer program stored in the memory, so that the apparatus performs the method according to any one of claims 1 to 7.

## Patentansprüche

**1.** "Uplink"-Signalleistungssteuerverfahren, umfassend:

Empfangen (102) von "Downlink"-Signalisierung, die von einer Basisstation abgegeben wird, an einem Endgerät, und Bestimmen einer Wellenform, die von dem Endgerät verwendet wird, basierend auf der "Downlink"-Signalisierung;

Bestimmen (103) einer Leistungsdifferenz, die einer Ziel-Zeit-Frequenz-Ressource entspricht, durch das Endgerät basierend auf einer Entsprechung zwischen der von dem Endgerät verwendeten Wellenform und einer Leistungsdifferenz; und

Bestimmen (104) einer "Uplink"-Sendeleistung eines "Uplink"-Signals, das auf die Ziel-Zeit-Frequenz-Ressource gemappt wird, durch das Endgerät basierend auf der bestimmten Leistungsdifferenz, und Senden des "Uplink"-Signals unter Verwendung der "Uplink"-Sendeleistung; **dadurch gekennzeichnet, dass**

die Leistungsdifferenz in der Entsprechung eine Leistungsdifferenz zwischen einem ersten Symbol und einem zweiten Symbol angibt, wobei das erste Symbol ein "Orthogonal Frequency Division Multiplexing"- OFDM-Symbol ist, gemultiplext mit einem Referenzsignal RS und einem Kanal, und das zweite Symbol ein OFDM-Symbol ist, das nicht mit einem RS gemultiplext ist; oder

die Leistungsdifferenz in der Entsprechung eine Leistungsdifferenz zwischen einem ersten Ressourcenelement RE in einem ersten Symbol und einem zweiten RE in einem zweiten Symbol angibt, wobei das erste Symbol ein OFDM-Symbol ist, gemultiplext mit einem RS und einem Kanal, das zweite Symbol ein OFDM-Symbol ist, das nicht mit einem RS gemultiplext ist, das erste RE ein RE ist, das zum Mappen eines Kanals verwendet wird, und das zweite RE ein RE ist, das zum Mappen eines Kanals verwendet wird.

**2.** Verfahren nach Anspruch 1, wobei das RS ein Referenzsignal, das zur Demodulation verwendet wird, oder ein

Referenzsignal ist, das zum "Channel Sounding" verwendet wird, und der Kanal ein "Uplink"-Datenkanal, ein "Uplink"-Steuerkanal oder ein Direktzugriffskanal ist.

**3.** Verfahren nach einem der Ansprüche 1 bis 2, wobei eine Leistungsdifferenz, die einer zyklischen Präfix-"Orthogonal Frequency Division Multiplexing"- CP-OFDM-Wellenform entspricht, sich von einer Leistungsdifferenz unterscheidet, die einer diskreten Fourier-Transformation-Spreizungs-"Orthogonal Frequency Division Multiplexing"- DFT-s-OFDM-Wellenform entspricht.

**4.** Verfahren nach einem der Ansprüche 1 bis 3, wobei

die "Downlink"-Signalisierung eine Signalisierung der Bitübertragungsschicht ist; oder
die "Downlink"-Signalisierung eine Signalisierung einer höheren Schicht ist.

**5.** "Uplink"-Signalsendeverfahren, umfassend:

Empfangen (402) von "Downlink"-Signalisierung, die durch eine Basisstation abgegeben wird, an einem Endgerät, wobei die "Downlink"-Signalisierung eine Leistungsdifferenz des Endgeräts auf einer Ziel-Zeit-Frequenz-Ressource angibt; und Bestimmen (403) einer "Uplink"-Sendeleistung eines "Uplink"-Signals, das auf die Ziel-Zeit-Frequenz-Ressource gemappt wird, durch das Endgerät basierend auf "Downlink"-Signalisierung, und Senden des "Uplink"-Signals unter Verwendung der "Uplink"-Sendeleistung;
**dadurch gekennzeichnet, dass** die durch die "Downlink"-Signalisierung angegebene Leistungsdifferenz eine Leistungsdifferenz zwischen einem ersten Symbol und einem zweiten Symbol angibt, wobei das erste Symbol ein OFDM-Symbol ist, gemultiplext mit einem RS und einem Kanal, und das zweite Symbol ein OFDM-Symbol ist, das nicht mit einem RS gemultiplext ist; oder
die durch die "Downlink"-Signalisierung angegebene Leistungsdifferenz eine Leistungsdifferenz zwischen einem ersten RE in einem ersten Symbol und einem zweiten RE in einem zweiten Symbol angibt, wobei das erste Symbol ein OFDM-Symbol ist, gemultiplext mit einem RS und einem Kanal, das zweite Symbol ein OFDM-Symbol ist, das nicht mit einem RS gemultiplext ist, das erste RE ein RE ist, das zum Mappen eines Kanals verwendet wird, und das zweite RE ein RE ist, das zum Mappen eines Kanals verwendet wird.

**6.** "Uplink"-Signalempfangsverfahren, umfassend:

Bestimmen (101) einer von einem Endgerät verwendeten Wellenform durch eine Basisstation und Senden von "Downlink"-Signalisierung entsprechend der Wellenform an das Endgerät;
Empfangen (105) eines "Uplink"-Signals, das durch das Endgerät gesendet wird und das auf eine Ziel-Zeit-Frequenz-Ressource gemappt wird, an der Basisstation; und
Bestimmen (106) einer Leistungsdifferenz, die dem "Uplink"-Signal auf der Ziel-Zeit-Frequenz-Ressource entspricht, durch die Basisstation basierend auf der von dem Endgerät verwendeten Wellenform und einer Entsprechung zwischen einer Wellenform und einer Leistungsdifferenz, und Parsen (107) des "Uplink"-Signals basierend auf der Leistungsdifferenz;
**dadurch gekennzeichnet, dass** die Leistungsdifferenz in der Entsprechung eine Leistungsdifferenz zwischen einem ersten Symbol und einem zweiten Symbol angibt, wobei das erste Symbol ein "Orthogonal Frequency Division Multiplexing"-OFDM-Symbol ist, gemultiplext mit einem Referenzsignal RS und einem Kanal, und das zweite Symbol ein OFDM-Symbol ist, das nicht mit einem RS gemultiplext ist; oder
die Leistungsdifferenz in der Entsprechung eine Leistungsdifferenz zwischen einem ersten Ressourcenelement RE in einem ersten Symbol und einem zweiten RE in einem zweiten Symbol angibt, wobei das erste Symbol ein OFDM-Symbol ist, gemultiplext mit einem RS und einem Kanal, das zweite Symbol ein OFDM-Symbol ist, das nicht mit einem RS gemultiplext ist, das erste RE ein RE ist, das zum Mappen eines Kanals verwendet wird, und das zweite RE ein RE ist, das zum Mappen eines Kanals verwendet wird.

**7.** "Uplink"-Signalempfangsverfahren, umfassend:

Senden (402) von "Downlink"-Signalisierung durch eine Basisstation an ein Endgerät, wobei die "Downlink"-Signalisierung eine Leistungsdifferenz des Endgeräts auf einer Ziel-Zeit-Frequenz-Ressource angibt;
Empfangen (404) eines "Uplink"-Signals, das durch das Endgerät gesendet wird und das auf eine Ziel-Zeit-Frequenz-Ressource gemappt wird, an der Basisstation; und
Parsen (405) des "Uplink"-Signals basierend auf der Leistungsdifferenz auf der Ziel-Zeit-Frequenz-Ressource durch die Basisstation;

**dadurch gekennzeichnet, dass** die Leistungsdifferenz in der Entsprechung eine Leistungsdifferenz zwischen einem ersten Symbol und einem zweiten Symbol angibt, wobei das erste Symbol ein "Orthogonal Frequency Division Multiplexing"-OFDM-Symbol ist, gemultiplext mit einem Referenzsignal RS und einem Kanal, und das zweite Symbol ein OFDM-Symbol ist, das nicht mit einem RS gemultiplext ist; oder
die Leistungsdifferenz in der Entsprechung eine Leistungsdifferenz zwischen einem ersten Ressourcenelement RE in einem ersten Symbol und einem zweiten RE in einem zweiten Symbol angibt, wobei das erste Symbol ein OFDM-Symbol ist, gemultiplext mit einem RS und einem Kanal, das zweite Symbol ein OFDM-Symbol ist, das nicht mit einem RS gemultiplext ist, das erste RE ein RE ist, das zum Mappen eines Kanals verwendet wird, und das zweite RE ein RE ist, das zum Mappen eines Kanals verwendet wird.

**8.** Endgerät (500), umfassend:

einen Sendeempfänger (501), der konfiguriert ist zum: Empfangen von "Downlink"-Signalisierung, die durch eine Basisstation abgegeben wird, und Senden eines "Uplink"-Signals unter Verwendung einer "Uplink"-Sendeleistung, die durch einen Prozessor bestimmt wird; und
den Prozessor, der konfiguriert ist zum: Bestimmen einer von dem Endgerät verwendeten Wellenform basierend auf der "Downlink"-Signalisierung; Bestimmen einer Leistungsdifferenz entsprechend einer Ziel-Zeit-Frequenz-Ressource basierend auf einer Entsprechung zwischen der von dem Endgerät verwendeten Wellenform und einer Leistungsdifferenz; und Bestimmen der "Uplink"-Sendeleistung des "Uplink"-Signals, das auf die Ziel-Zeit-Frequenz-Ressource gemappt wird, basierend auf der bestimmten Leistungsdifferenz;
**dadurch gekennzeichnet, dass** die Leistungsdifferenz in der Entsprechung eine Leistungsdifferenz zwischen einem ersten Symbol und einem zweiten Symbol angibt, wobei das erste Symbol ein OFDM-Symbol ist, gemultiplext mit einem Referenzsignal RS und einem Kanal, und das zweite Symbol ein OFDM-Symbol ist, das nicht mit einem RS gemultiplext ist; oder
die Leistungsdifferenz in der Entsprechung eine Leistungsdifferenz zwischen einem ersten RE in einem ersten Symbol und einem zweiten RE in einem zweiten Symbol angibt, wobei das erste Symbol ein OFDM-Symbol ist, gemultiplext mit einem RS und einem Kanal, das zweite Symbol ein OFDM-Symbol ist, das nicht mit einem RS gemultiplext ist, das erste RE ein RE ist, das zum Mappen eines Kanals verwendet wird, und das zweite RE ein RE ist, das zum Mappen eines Kanals verwendet wird.

**9.** Endgerät (600), umfassend:

einen Sendeempfänger (601), der konfiguriert ist zum: Empfangen von "Downlink"-Signalisierung, die durch eine Basisstation abgegeben wird, wobei die "Downlink"-Signalisierung eine Leistungsdifferenz des Endgeräts auf einer Ziel-Zeit-Frequenz-Ressource angibt, und Senden eines "Uplink"-Signals unter Verwendung einer "Uplink"-Sendeleistung, die durch einen Prozessor bestimmt wird; und
den Prozessor, der konfiguriert ist, um basierend auf der "Downlink"-Signalisierung die "Uplink"-Sendeleistung des "Uplink"-Signals zu bestimmen, das auf die Ziel-Zeit-Frequenz-Ressource gemappt wird;
**dadurch gekennzeichnet, dass** die Leistungsdifferenz in der Entsprechung eine Leistungsdifferenz zwischen einem ersten Symbol und einem zweiten Symbol angibt, wobei das erste Symbol ein "Orthogonal Frequency Division Multiplexing"-OFDM-Symbol ist, gemultiplext mit einem Referenzsignal RS und einem Kanal, und das zweite Symbol ein OFDM-Symbol ist, das nicht mit einem RS gemultiplext ist; oder
die Leistungsdifferenz in der Entsprechung eine Leistungsdifferenz zwischen einem ersten Ressourcenelement RE in einem ersten Symbol und einem zweiten RE in einem zweiten Symbol angibt, wobei das erste Symbol ein OFDM-Symbol ist, gemultiplext mit einem RS und einem Kanal, das zweite Symbol ein OFDM-Symbol ist, das nicht mit einem RS gemultiplext ist, das erste RE ein RE ist, das zum Mappen eines Kanals verwendet wird, und das zweite RE ein RE ist, das zum Mappen eines Kanals verwendet wird.

**10.** Basisstation (700), umfassend:

einen Prozessor, der konfiguriert ist zum: Bestimmen einer von einem Endgerät verwendeten Wellenform; Bestimmen einer Leistungsdifferenz, die einem "Uplink"-Signal auf einer Ziel-Zeit-Frequenz-Ressource entspricht, basierend auf der von dem Endgerät verwendeten Wellenform und einer Entsprechung zwischen einer Wellenform und einer Leistungsdifferenz; und Parsen des "Uplink"-Signals basierend auf der Leistungsdifferenz; und
einen Sendeempfänger, der konfiguriert ist, um an das Endgerät "Downlink"-Signalisierung entsprechend der Wellenform zu senden und das "Uplink"-Signal zu empfangen, das von dem Endgerät gesendet wird und das auf die Ziel-Zeit-Frequenz-Ressource gemappt wird;

**dadurch gekennzeichnet, dass** die Leistungsdifferenz in der Entsprechung eine Leistungsdifferenz zwischen einem ersten Symbol und einem zweiten Symbol angibt, wobei das erste Symbol ein "Orthogonal Frequency Division Multiplexing"-OFDM-Symbol ist, gemultiplext mit einem Referenzsignal RS und einem Kanal, und das zweite Symbol ein OFDM-Symbol ist, das nicht mit einem RS gemultiplext ist; oder
die Leistungsdifferenz in der Entsprechung eine Leistungsdifferenz zwischen einem ersten Ressourcenelement RE in einem ersten Symbol und einem zweiten RE in einem zweiten Symbol angibt, wobei das erste Symbol ein OFDM-Symbol ist, gemultiplext mit einem RS und einem Kanal, das zweite Symbol ein OFDM-Symbol ist, das nicht mit einem RS gemultiplext ist, das erste RE ein RE ist, das zum Mappen eines Kanals verwendet wird, und das zweite RE ein RE ist, das zum Mappen eines Kanals verwendet wird.

**11.** Basisstation (800), umfassend:

einen Sendeempfänger, der konfiguriert ist zum: Senden von "Downlink"-Signalisierung an ein Endgerät, wobei die "Downlink"-Signalisierung eine Leistungsdifferenz des Endgeräts auf einer Ziel-Zeit-Frequenz-Ressource angibt; und Empfangen eines "Uplink"-Signals, das von dem Endgerät gesendet wird und das auf die Ziel-Zeit-Frequenz-Ressource gemappt wird; und
einen Prozessor, der konfiguriert ist, um das "Uplink"-Signal basierend auf der Leistungsdifferenz auf der Ziel-Zeit-Frequenz-Ressource zu parsen;
**dadurch gekennzeichnet, dass** die Leistungsdifferenz in der Entsprechung eine Leistungsdifferenz zwischen einem ersten Symbol und einem zweiten Symbol angibt, wobei das erste Symbol ein "Orthogonal Frequency Division Multiplexing"-OFDM-Symbol ist, gemultiplext mit einem Referenzsignal RS und einem Kanal, und das zweite Symbol ein OFDM-Symbol ist, das nicht mit einem RS gemultiplext ist; oder
die Leistungsdifferenz in der Entsprechung eine Leistungsdifferenz zwischen einem ersten Ressourcenelement RE in einem ersten Symbol und einem zweiten RE in einem zweiten Symbol angibt, wobei das erste Symbol ein OFDM-Symbol ist, gemultiplext mit einem RS und einem Kanal, das zweite Symbol ein OFDM-Symbol ist, das nicht mit einem RS gemultiplext ist, das erste RE ein RE ist, das zum Mappen eines Kanals verwendet wird, und das zweite RE ein RE ist, das zum Mappen eines Kanals verwendet wird.

**12.** Kommunikationsvorrichtung (1000), umfassend einen Prozessor, wobei der Prozessor an einen Speicher gekoppelt ist, wobei

der Speicher konfiguriert ist, um ein Computerprogramm zu speichern; und
der Prozessor konfiguriert ist, um das in dem Speicher gespeicherte Computerprogramm auszuführen, so dass die Vorrichtung das Verfahren gemäß einem der Ansprüche 1 bis 7 durchführt.

## Revendications

**1.** Procédé de commande de puissance de signal de liaison montante, comprenant :

la réception (102), par un terminal, d'une signalisation de liaison descendante délivrée par une station de base, et la détermination, sur la base de la signalisation de liaison descendante, d'une forme d'onde utilisée par le terminal ;
la détermination (103), par le terminal sur la base d'une correspondance entre la forme d'onde utilisée par le terminal et une différence de puissance, d'une différence de puissance correspondant à une ressource temps-fréquence cible ; et
la détermination (104), par le terminal sur la base de la différence de puissance déterminée, d'une puissance d'émission de liaison montante d'un signal de liaison montante qui est mappé sur la ressource temps-fréquence cible, et l'envoi du signal de liaison montante en utilisant la puissance d'émission de liaison montante ; **caractérisé en ce que**
la différence de puissance dans la correspondance indique une différence de puissance entre un premier symbole et un second symbole, le premier symbole est un symbole à multiplexage par répartition orthogonale de la fréquence OFDM multiplexé par un signal de référence RS et un canal, et le second symbole est un symbole OFDM non multiplexé par un RS ; ou
la différence de puissance dans la correspondance indique une différence de puissance entre un premier élément de ressource RE dans un premier symbole et un second RE dans un second symbole, le premier symbole est un symbole OFDM multiplexé par un RS et un canal, le second symbole est un symbole OFDM non multiplexé par un RS, le premier RE est un RE utilisé pour le mappage d'un canal, et le second RE est un

RE utilisé pour le mappage d'un canal.

2. Procédé selon la revendication 1, le RS étant un signal de référence utilisé pour la démodulation ou un signal de référence utilisé pour le sondage de canal, et le canal étant un canal de données de liaison montante, un canal de commande de liaison montante ou un canal d'accès aléatoire.

3. Procédé selon l'une quelconque des revendications 1 et 2, une différence de puissance correspondant à une forme d'onde à préfixe cyclique et à multiplexage par répartition orthogonale de la fréquence CP-OFDM étant différente d'une différence de puissance correspondant à une forme d'onde à étalement par transformée de Fourier discrète et à multiplexage par répartition orthogonale de la fréquence DFT-s-OFDM.

4. Procédé selon l'une quelconque des revendications 1 à 3,
la signalisation de liaison descendante étant une signalisation de couche physique ; ou la signalisation de liaison descendante étant une signalisation de couche supérieure.

5. Procédé d'envoi de signal de liaison montante, comprenant :

la réception (402), par un terminal, d'une signalisation de liaison descendante délivrée par une station de base, la signalisation de liaison descendante indiquant une différence de puissance du terminal sur une ressource temps-fréquence cible, et
la détermination (403), par le terminal sur la base de la signalisation de liaison descendante, d'une puissance d'émission de liaison montante d'un signal de liaison montante qui est mappé sur la ressource temps-fréquence cible, et l'envoi du signal de liaison montante en utilisant la puissance d'émission de liaison montante ;
**caractérisé en ce que** la différence de puissance indiquée par la signalisation de liaison descendante indique une différence de puissance entre un premier symbole et un second symbole, le premier symbole est un symbole OFDM multiplexé par un RS et un canal, et le second symbole est un symbole OFDM non multiplexé par un RS ; ou
la différence de puissance indiquée par la signalisation de liaison descendante indique une différence de puissance entre un premier RE dans un premier symbole et un second RE dans un second symbole, le premier symbole est un symbole OFDM multiplexé par un RS et un canal, le second symbole est un symbole OFDM non multiplexé par un RS, le premier RE est un RE utilisé pour le mappage d'un canal, et le second RE est un RE utilisé pour le mappage d'un canal.

6. Procédé de réception de signal de liaison montante, comprenant :

la détermination (101), par une station de base, d'une forme d'onde utilisée par un terminal, et l'envoi, au terminal, d'une signalisation de liaison descendante correspondant à la forme d'onde ;
la réception (105), par la station de base, d'un signal de liaison montante qui est envoyé par le terminal et qui est mappé sur une ressource temps-fréquence cible ; et
la détermination (106), par la station de base sur la base de la forme d'onde utilisée par le terminal et d'une correspondance entre une forme d'onde et une différence de puissance, d'une différence de puissance correspondant au signal de liaison montante sur la ressource temps-fréquence cible, et l'analyse (107) du signal de liaison montante sur la base de la différence de puissance ;
**caractérisé en ce que** la différence de puissance dans la correspondance indique une différence de puissance entre un premier symbole et un second symbole, le premier symbole est un symbole à multiplexage par répartition orthogonale de la fréquence OFDM multiplexé par un signal de référence RS et un canal, et le second symbole est un symbole OFDM non multiplexé par un RS ; ou
la différence de puissance dans la correspondance indique une différence de puissance entre un premier élément de ressource RE dans un premier symbole et un second RE dans un second symbole, le premier symbole est un symbole OFDM multiplexé par un RS et un canal, le second symbole est un symbole OFDM non multiplexé par un RS, le premier RE est un RE utilisé pour le mappage d'un canal, et le second RE est un RE utilisé pour le mappage d'un canal.

7. Procédé de réception de signal de liaison montante, comprenant :

l'envoi (402), par une station de base, d'une signalisation de liaison descendante à un terminal, la signalisation de liaison descendante indiquant une différence de puissance du terminal sur une ressource temps-fréquence cible ;

la réception (404), par la station de base, d'un signal de liaison montante qui est envoyé par le terminal et qui est mappé sur la ressource temps-fréquence cible ; et
l'analyse (405), par la station de base, du signal de liaison montante sur la base de la différence de puissance sur la ressource temps-fréquence cible ;
**caractérisé en ce que** la différence de puissance dans la correspondance indique une différence de puissance entre un premier symbole et un second symbole, le premier symbole est un symbole à multiplexage par répartition orthogonale de la fréquence OFDM multiplexé par un signal de référence RS et un canal, et le second symbole est un symbole OFDM non multiplexé par un RS ; ou
la différence de puissance dans la correspondance indique une différence de puissance entre un premier élément de ressource RE dans un premier symbole et un second RE dans un second symbole, le premier symbole est un symbole OFDM multiplexé par un RS et un canal, le second symbole est un symbole OFDM non multiplexé par un RS, le premier RE est un RE utilisé pour le mappage d'un canal, et le second RE est un RE utilisé pour le mappage d'un canal.

**8.** Terminal (500), comprenant :

un émetteur-récepteur (501), configuré pour : recevoir une signalisation de liaison descendante délivrée par une station de base, et envoyer un signal de liaison montante en utilisant une puissance d'émission de liaison montante déterminée par un processeur ; et
le processeur, configuré pour : déterminer, sur la base de la signalisation de liaison descendante, une forme d'onde utilisée par le terminal ; déterminer, sur la base d'une correspondance entre la forme d'onde utilisée par le terminal et une différence de puissance, une différence de puissance correspondant à une ressource temps-fréquence cible ; et déterminer, sur la base de la différence de puissance déterminée, la puissance d'émission de liaison montante du signal de liaison montante qui est mappé sur la ressource temps-fréquence cible ;
**caractérisé en ce que** la différence de puissance dans la correspondance indique une différence de puissance entre un premier symbole et un second symbole, le premier symbole est un symbole OFDM multiplexé par un RS et un canal, et le second symbole est un symbole OFDM non multiplexé par un RS ; ou
la différence de puissance dans la correspondance indique une différence de puissance entre un premier RE dans un premier symbole et un second RE dans un second symbole, le premier symbole est un symbole OFDM multiplexé par un RS et un canal, le second symbole est un symbole OFDM non multiplexé par un RS, le premier RE est un RE utilisé pour le mappage d'un canal, et le second RE est un RE utilisé pour le mappage d'un canal.

**9.** Terminal (600), comprenant :

un émetteur-récepteur (601), configuré pour : recevoir une signalisation de liaison descendante délivrée par une station de base, la signalisation de liaison descendante indiquant une différence de puissance du terminal sur une ressource temps-fréquence cible, et envoyer un signal de liaison montante en utilisant une puissance d'émission de liaison montante déterminée par un processeur ; et
le processeur, configuré pour déterminer, sur la base de la signalisation de liaison descendante, la puissance d'émission de liaison montante du signal de liaison montante qui est mappé sur la ressource temps-fréquence cible ;
**caractérisé en ce que** la différence de puissance dans la correspondance indique une différence de puissance entre un premier symbole et un second symbole, le premier symbole est un symbole à multiplexage par répartition orthogonale de la fréquence OFDM multiplexé par un signal de référence RS et un canal, et le second symbole est un symbole OFDM non multiplexé par un RS ; ou
la différence de puissance dans la correspondance indique une différence de puissance entre un premier élément de ressource RE dans un premier symbole et un second RE dans un second symbole, le premier symbole est un symbole OFDM multiplexé par un RS et un canal, le second symbole est un symbole OFDM non multiplexé par un RS, le premier RE est un RE utilisé pour le mappage d'un canal, et le second RE est un RE utilisé pour le mappage d'un canal.

**10.** Station de base (700), comprenant :

un processeur, configuré pour : déterminer une forme d'onde utilisée par un terminal ;
déterminer, sur la base de la forme d'onde utilisée par le terminal et d'une correspondance entre une forme d'onde et une différence de puissance, une différence de puissance correspondant à un signal de liaison montante sur une ressource temps-fréquence cible ; et analyser le signal de liaison montante sur la base de la différence de puissance ; et

un émetteur-récepteur, configuré pour envoyer, au terminal, une signalisation de liaison descendante correspondant à la forme d'onde, et recevoir le signal de liaison montante qui est envoyé par le terminal et qui est mappé sur la ressource temps-fréquence cible ;

**caractérisée en ce que** la différence de puissance dans la correspondance indique une différence de puissance entre un premier symbole et un second symbole, le premier symbole est un symbole à multiplexage par répartition orthogonale de la fréquence OFDM multiplexé par un signal de référence RS et un canal, et le second symbole est un symbole OFDM non multiplexé par un RS ; ou

la différence de puissance dans la correspondance indique une différence de puissance entre un premier élément de ressource RE dans un premier symbole et un second RE dans un second symbole, le premier symbole est un symbole OFDM multiplexé par un RS et un canal, le second symbole est un symbole OFDM non multiplexé par un RS, le premier RE est un RE utilisé pour le mappage d'un canal, et le second RE est un RE utilisé pour le mappage d'un canal.

**11.** Station de base (800), comprenant :

un émetteur-récepteur, configuré pour : envoyer une signalisation de liaison descendante à un terminal, la signalisation de liaison descendante indiquant une différence de puissance du terminal sur une ressource temps-fréquence cible ; et recevoir un signal de liaison montante qui est envoyé par le terminal et qui est mappé sur la ressource temps-fréquence cible ; et

un processeur, configuré pour analyser le signal de liaison montante sur la base de la différence de puissance sur la ressource temps-fréquence cible ;

**caractérisée en ce que** la différence de puissance dans la correspondance indique une différence de puissance entre un premier symbole et un second symbole, le premier symbole est un symbole à multiplexage par répartition orthogonale de la fréquence OFDM multiplexé par un signal de référence RS et un canal, et le second symbole est un symbole OFDM non multiplexé par un RS ; ou

la différence de puissance dans la correspondance indique une différence de puissance entre un premier élément de ressource RE dans un premier symbole et un second RE dans un second symbole, le premier symbole est un symbole OFDM multiplexé par un RS et un canal, le second symbole est un symbole OFDM non multiplexé par un RS, le premier RE est un RE utilisé pour le mappage d'un canal, et le second RE est un RE utilisé pour le mappage d'un canal.

**12.** Appareil de communication (1000), comprenant un processeur, le processeur étant couplé à une mémoire,

la mémoire étant configurée pour stocker un programme informatique ; et

le processeur étant configuré pour exécuter le programme informatique stocké dans la mémoire, de sorte que l'appareil réalise le procédé selon l'une quelconque des revendications 1 à 7.

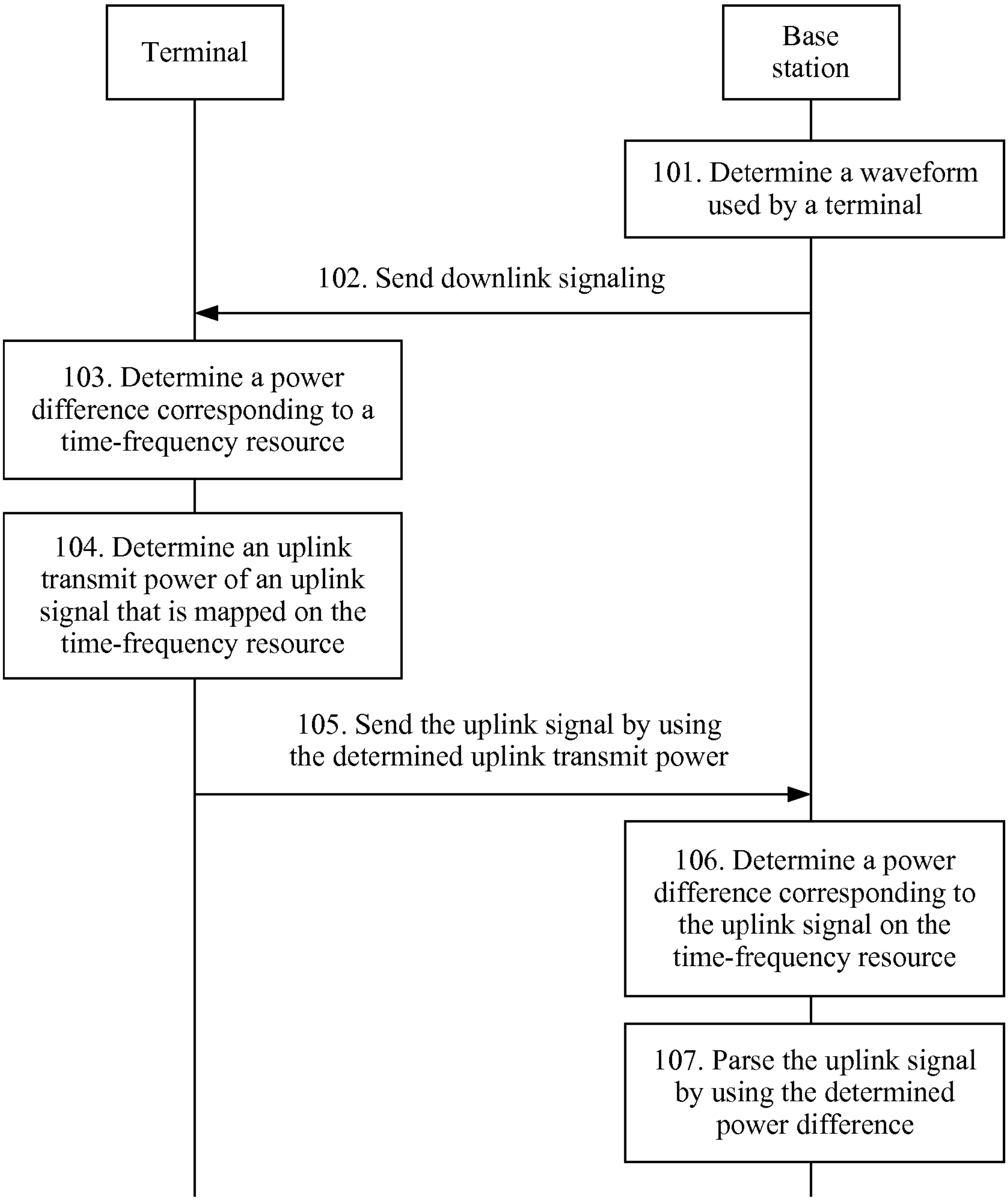
Terminal
Base station
101. Determine a waveform used by a terminal
102. Send downlink signaling
103. Determine a power difference corresponding to a time-frequency resource
104. Determine an uplink transmit power of an uplink signal that is mapped on the time-frequency resource
105. Send the uplink signal by using the determined uplink transmit power
106. Determine a power difference corresponding to the uplink signal on the time-frequency resource
107. Parse the uplink signal by using the determined power difference

FIG. 1

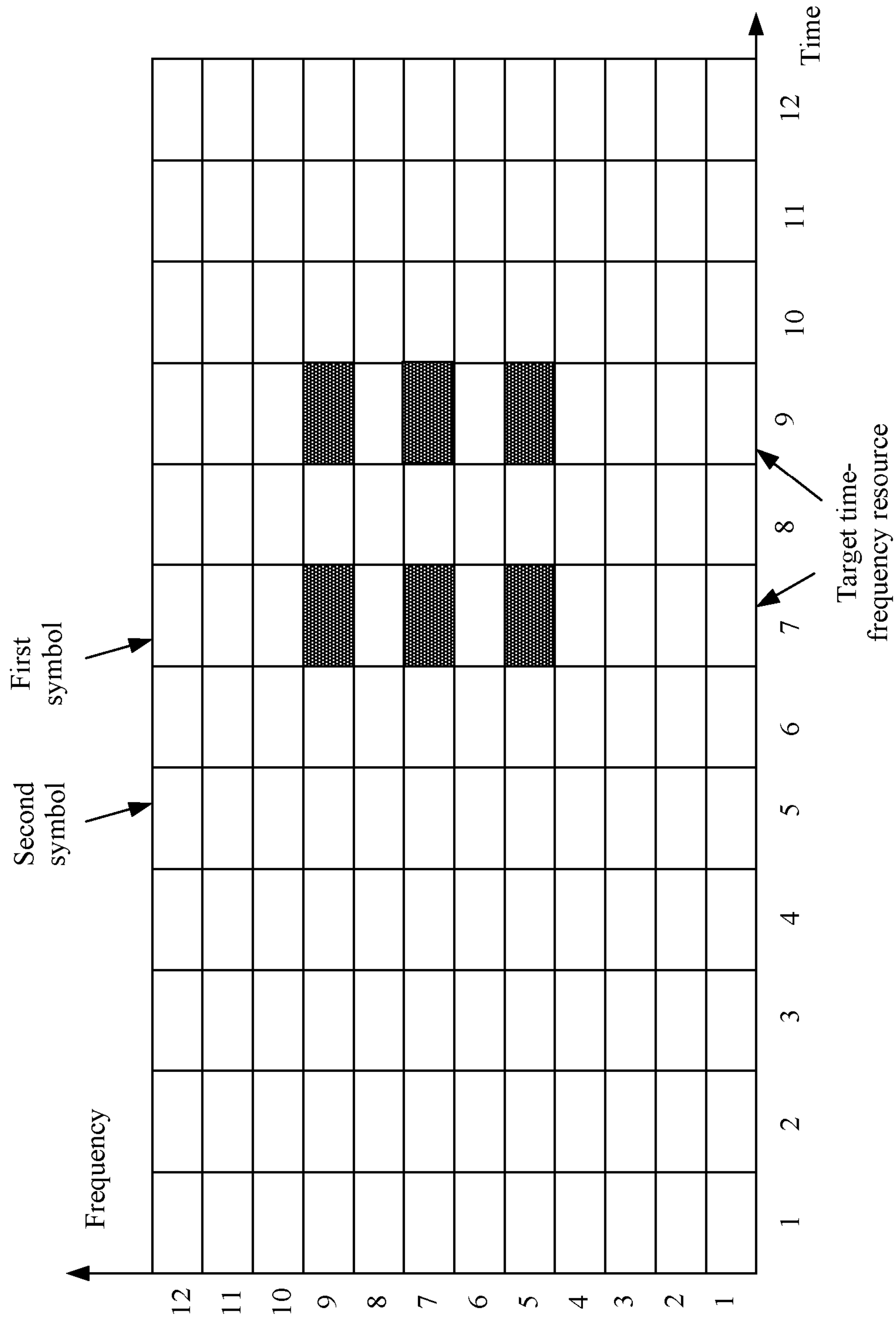
Time
Frequency
First symbol
Second symbol
Target time-frequency resource
1 2 3 4 5 6 7 8 9 10 11 12
1 2 3 4 5 6 7 8 9 10 11 12

FIG. 2

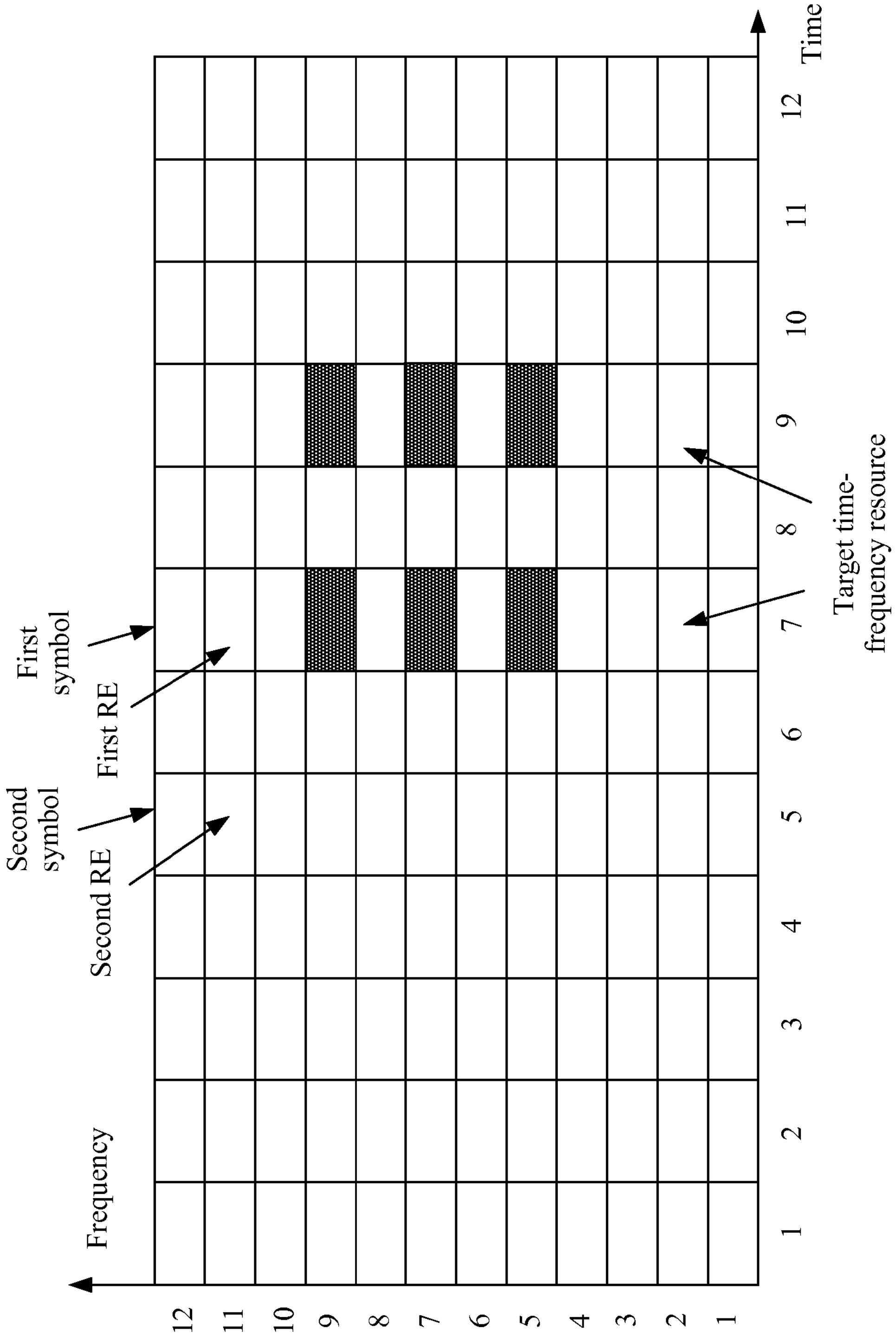
Frequency
Time
First symbol
First RE
Second symbol
Second RE
Target time-frequency resource
1
2
3
4
5
6
7
8
9
10
11
12

FIG. 3

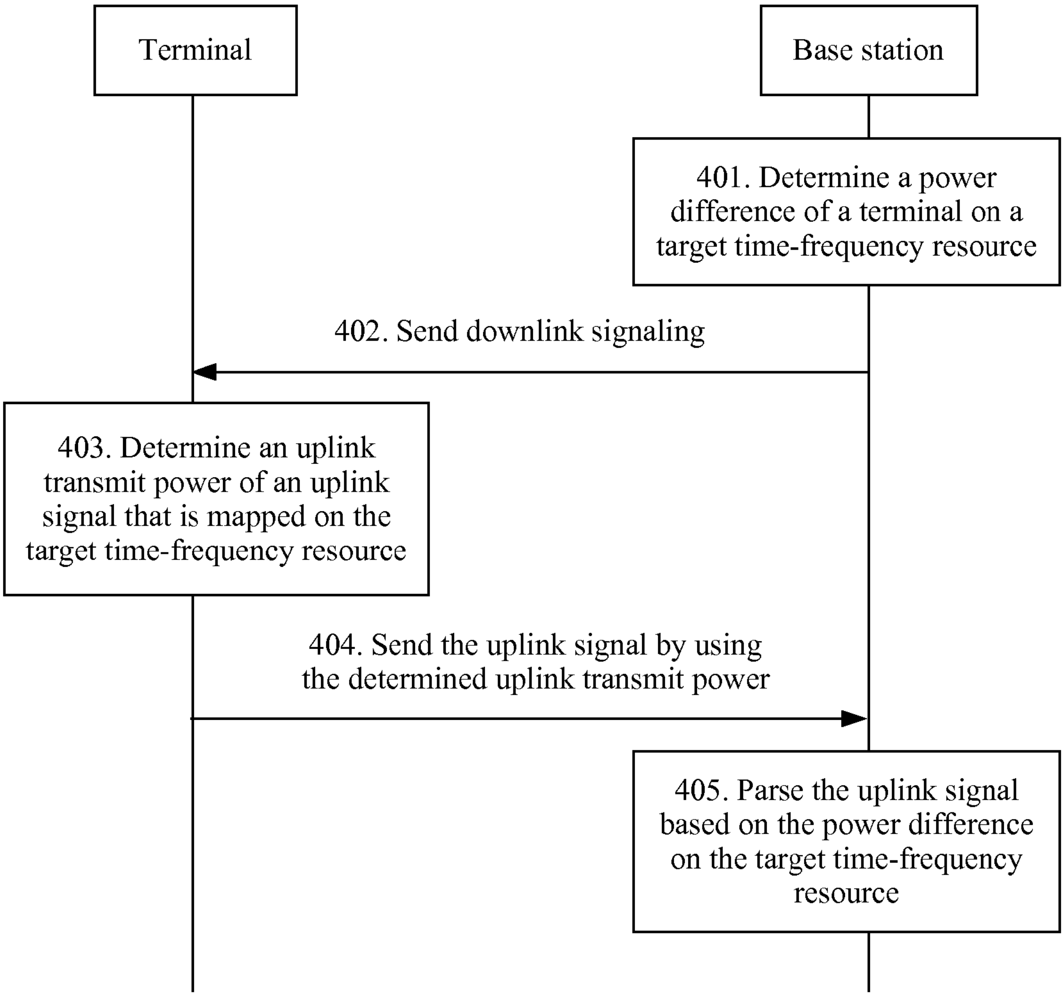
Terminal
Base station
401. Determine a power difference of a terminal on a target time-frequency resource
402. Send downlink signaling
403. Determine an uplink transmit power of an uplink signal that is mapped on the target time-frequency resource
404. Send the uplink signal by using the determined uplink transmit power
405. Parse the uplink signal based on the power difference on the target time-frequency resource

FIG. 4

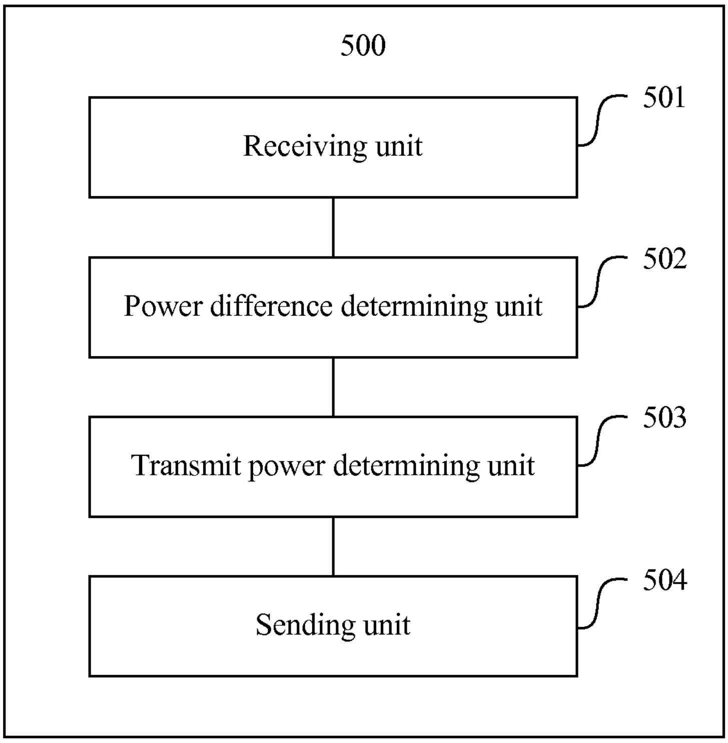
500
Receiving unit
501
Power difference determining unit
502
Transmit power determining unit
503
Sending unit
504

FIG. 5

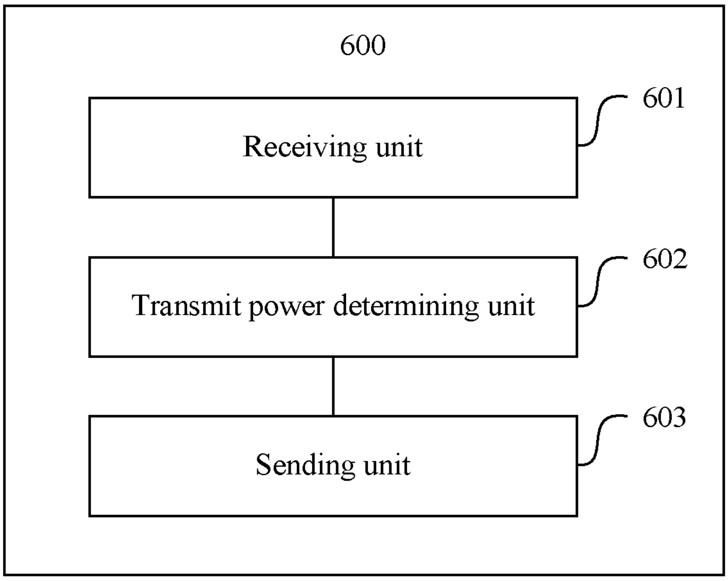
600
Receiving unit
601
Transmit power determining unit
602
Sending unit
603

FIG. 6

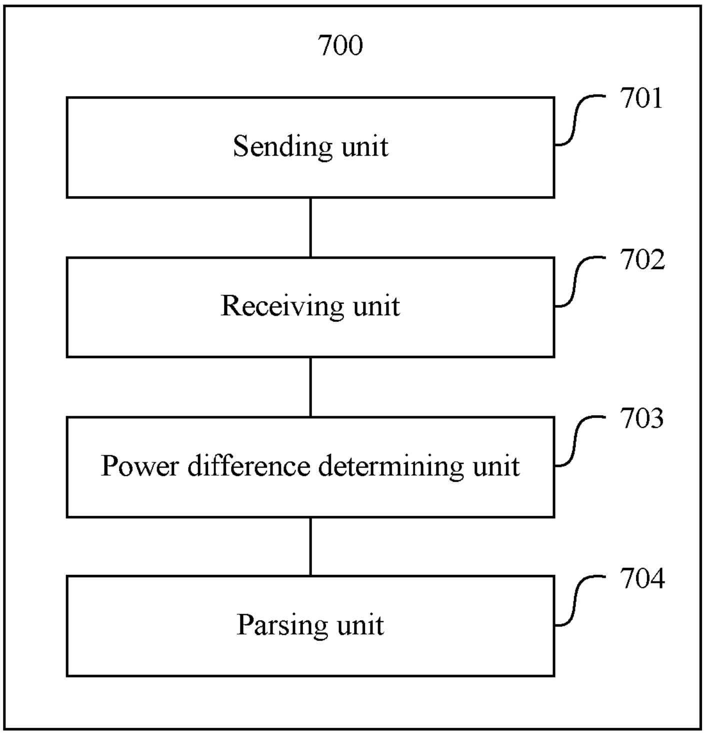
700
Sending unit
701
Receiving unit
702
Power difference determining unit
703
Parsing unit
704

FIG. 7

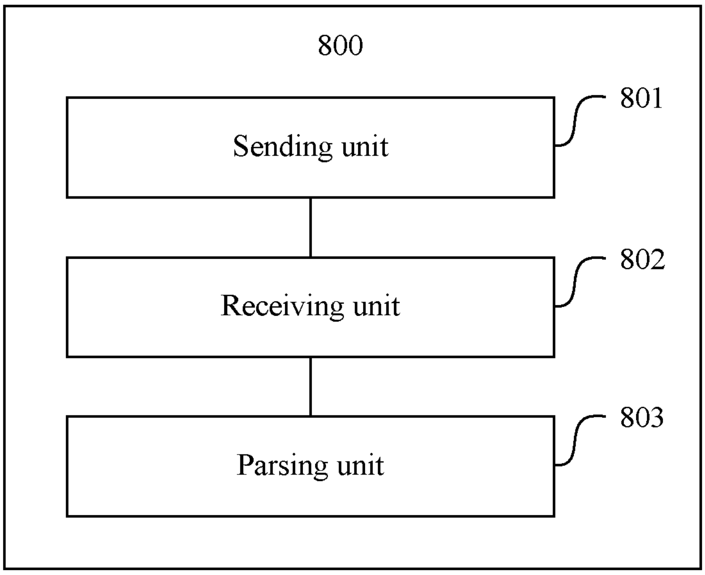
800
Sending unit
801
Receiving unit
802
Parsing unit
803

FIG. 8

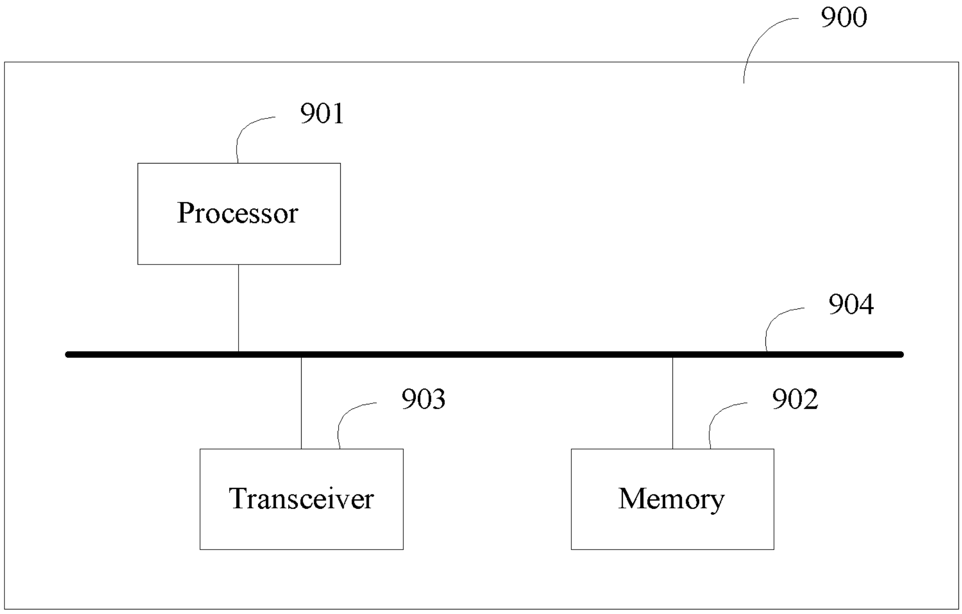
900
901
Processor
904
903
902
Transceiver
Memory

FIG. 9

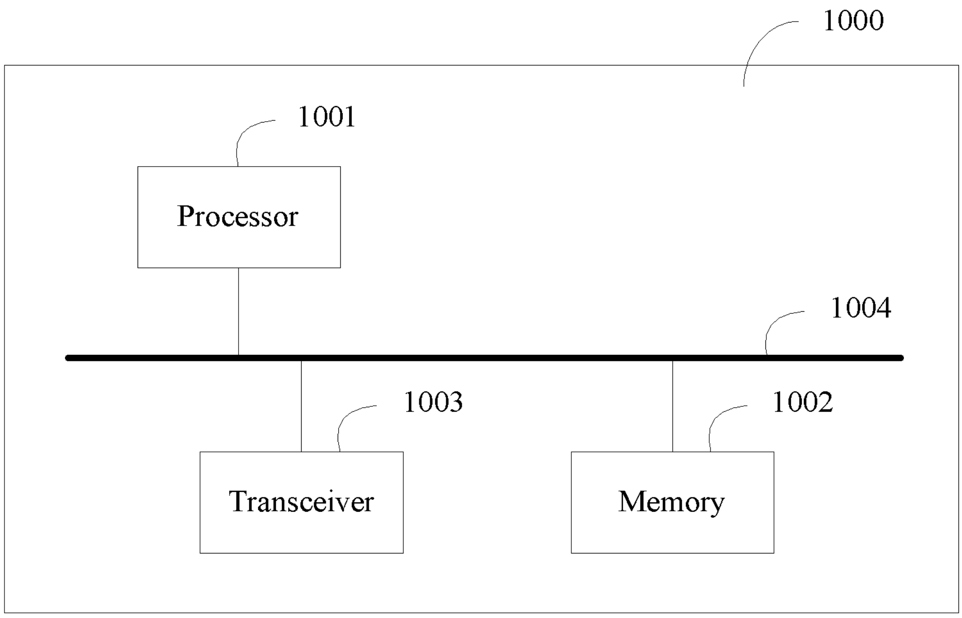
1000
1001
Processor
1004
1003
1002
Transceiver
Memory

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20180124710 A1
- CN 103379603